# EUROPEAN PATENT SPECIFICATION

(11) **EP 4 222 223 B1**
(45) Date of publication and mention of the grant of the patent: **02.07.2025**
(21) Application number: 21782751.8
(22) Date of filing: 28.09.2021
(51) Int. Cl.: C09D 5/16, C09D 7/63, C09D 5/02

(54) **FOULING RELEASE COATING COMPOSITION**
FÄULNISFREISETZENDE BESCHICHTUNGSZUSAMMENSETZUNG
COMPOSITION DE REVÊTEMENT ANTI-SALISSURES

(30) Priority: 29.09.2020 EP 20199102
(43) Date of publication of application: 09.08.2023
(73) Proprietor: Jotun A/S, 3202 Sandefjord (NO)
(72) Inventor: SZCZOTOK-PIECHACZEK, Anna, 3216 Sandefjord (NO); SEIM, Marit, 3970 Langesund (NO); READ, Marianne, 3942 Porsgrunn (NO); KRINGHAUG, Henrik H, 3115 Tønsberg (NO); HED, Kim Oeberg, 3942 Porsgrunn (NO)
(74) Representative: Dehns
(86) International application number: PCT/EP2021/076677
(87) International publication number: WO 2022/069482

(56) References cited:
- EP-A1- 2 161 318
- EP-A1- 2 921 297
- EP-A1- 3 540 022
- WO-A1-2009/133084
- WO-A1-2018/026648
- WO-A1-2018/134291
- WO-A2-2009/156608
- US-A1- 2008 275 204

## Description

This invention relates to fouling release coating compositions that are free of tin catalyst compounds and which can be cured at low temperature. In particular, the invention provides a fouling release composition comprising a low weight average molecular weight polysiloxane or a combination of a lower and higher weight average molecular weight polysiloxanes and an amidine or amine catalyst which can be cured at low temperature.

### Background

Fouling release coatings are used on marine vessels to prevent fouling by marine organisms. These work on the principle that the fouling release surface has a very low coefficient of friction and hence it is challenging for marine organisms to cling to the surface, especially when a vessel is underway and hence the action of the sea can wash marine organisms from the hull.

Fouling release coatings are therefore characterized by low surface tension and low modulus of elasticity so that biofouling does not stick to the surface or the biofouling is easily washed off by the friction of the water against the surface.

Such coatings often comprise of polysiloxane-based binders having reactive (curable) groups such as hydroxyl or silyl units. A polysiloxane-based binder can be hydrolyzed and condensed in the presence of moisture and catalysts.

Organotin (dioctyltin and dibutyltin) compounds are robust and thus extensively used to accelerate reactions such as room temperature vulcanizing (RTV) formulations. However, organotin compounds used as a catalyst are regarded as toxicologically harmful. Thus, it would be a benefit both from a health and environmental perspective to avoid the use of organotin compounds in fouling release coatings. Environmental regulatory agencies with the aim to protect human health and environment are also expected to increase restrictions on the use of organotin compounds in formulated products.

There are therefore several disclosures of the curing of polysiloxanes using tin-free curing technology that recommend other organometallic compounds as a substitute for organotin catalysts. Preferably, any replacement catalyst compounds should ensure similar properties to organometallic tin compounds in respect of curing time, pot-life, storage, and coating properties.

Many systems known from the prior art either cure at room temperature or elevated temperatures to ensure a sufficient crosslinking rate. A particular problem encountered with fouling release coatings is the issue of low-temperature curing. Curing at the low temperatures of marine coatings is important since shipyards operate all year. In some places, the application temperature might reach very low temperatures during winter. Most shipbuilding yards are now in China and Korea where winters are cold. Traditional ambient cure coatings require excessive cure time, affecting productivity and performance.

The objective of the present invention is to provide a low temperature curable coating composition comprising polysiloxane-based binders which is tin-free. The stated objective is achieved using a low weight average molecular weight (or low viscosity) polysiloxane or using a combination of polysiloxane binders where one of the binders has a lower molecular weight and the other a higher molecular weight in combination with amine or amidine based catalyst systems as defined in claim 1.

EP2921297 relates to an antifouling composite coating film comprising a urethane resin anticorrosive coating film and an antifouling coating film. The antifouling coating film is formed from a curable polysiloxane composition comprising (a) a diorganopolysiloxane having at least two functional groups in one molecule, (b) an organosilane having at least two hydroxyl groups or hydrolysable groups in one molecule and/or a partial hydrolysis-condensate thereof, and (c) a certain amino-group containing alkoxysilane and/or a reaction product thereof.

WO2018/134291 relates to a binder for a coating composition such as a marine coating composition, wherein said binder comprises a polymer comprising a polysiloxane group, a plurality of ester groups, and a plurality of thio groups, amino groups or disulphide groups.

WO2018/026648 relates to a coating composition comprising a macromolecule comprising (a) a dimethylsiloxane unit; and (b) a certain substituted methylsiloxane unit.

US2008/275204 relates to cardanol-based dimers formed by hydrosilylation and the use of these dimers to produce a self-polishing anti-fouling coating for use in marine environments.

WO2009/156608 relates to an article having antifouling properties for aquatic and particularly sea use, and to a method for slowing the growth of aquatic organisms on submersible or semi-submersible structures.

WO2009/133084 relates to an article having antisoiling properties and intended to be employed in aquatic uses, in particular marine uses, and also to a method for delaying the growth of aquatic organisms on submersible or semi-submersible structures.

EP2161318 relates to a triphenylboron compound-containing antifouling coating material composition, an antifouling agent set used for the same and a method for inhibiting and controlling decomposition of a triphenylboron compound.

EP3540022 relates to an antifouling coating composition comprising: a polyorganosiloxane block-containing hydrolysable copolymer (A) and medetomidine (B), wherein: the polyorganosiloxane block-containing hydrolysable copolymer (A) contains (i) a constituent unit derived from a hydrolysable group-containing monomer and (ii) a constituent unit derived from a polyorganosiloxane block-containing monomer.

There are applications in various fields in which tin catalysts are avoided.

EP2776162/WO2013/071078 is in the field of sealants and rubbers and does not therefore describe fouling release applications. This reference describes a composition comprising a polymer having at least a reactive silyl group, a crosslinker, catalyst selected form Fe(III) or Bi(III) complexes, adhesion promotor, and at least one acidic compound.

The focus is on replacing tin-catalysts while maintaining good curing properties and good adhesion. In the examples two different silanol terminated polysiloxanes are used having viscosities of 25 Pas and 3.6 Pas. We demonstrate that the combination of silanol terminated polysiloxanes with viscosities of 20 Pas and 3.5 Pas in the ratio of '078 does not result in curing at low temperatures.

WO2015/082408 provides a coating composition comprising curable organosiloxane polymer, an organobismuth compound and a silane coupling agent, applying a layer of the coating composition to an aged coating layer on a substrate. In the examples a hydroxy terminated polydimethylsiloxane with viscosity of 4000 mPas is used.

US2017/0210856 describes a composition for the manufacture of artificial stone comprising at least one organosilicon component and at least one nitrogen compound selected from guanidines and amidines. Siloxane binders with quite high viscosities (3000 - 13 000 mPas) are produced from low molecular weight compounds.

US2014/0342166 describes a curable composition for release coatings to be used with adhesives comprising at least one polyorganosiloxane, fluorinated polyorganosiloxane, or combination thereof and an amidine or guanidine catalyst.

In paragraph 54, it is described that a combination of different hydroxyl containing polyorganosiloxanes can be used, and a preferred option is to use one polysiloxane with high molecular weight (300,000 to 1,000,000, most preferred 500,000 to 700,000) and one with lower molecular weight (150 - 150,000). Curing was not obtained at room temperature, only at elevated temperatures.

US2015/0174904 describes a polysiloxane composition cured with bismuth and amidine for inkjet printing. The organopolysiloxane resin has a weight average molecular weight is in the range of 800 - 7500

US2012/0101237 is within the field of self-adhesive hardener compositions. The hardener composition in example 3 comprises a low molecular weight polydimethylsiloxane.

Surprisingly, the inventors have found that tin-free curing at low temperatures such as 5 °C could be achieved by using a low molecular weight (or low viscosity) polysiloxane or a mixture of two different polysiloxane binders with different molecular weights in combination with a low molecular weight amidine or amine catalyst as defined in claim 1. If only one polysiloxane-based binder with a high molecular weight is used, curing did not occur at 5 °C using the catalyst system of the invention.

It is preferable to also add a metal catalyst such as a bismuth, zinc or lithium-based catalyst to increase the robustness of the system and ensure appropriate pot-life.

The fouling release coating composition of the invention is less toxic. The fouling release composition of the invention may also cure at lower temperature.

### Summary of Invention

Viewed from one aspect, the invention provides a fouling release coating composition according to claim 1.

Viewed from one aspect the invention provides a fouling release coating composition, free of tin compounds, comprising:
(a) a polysiloxane-based binder system comprising at least one curable polysiloxane-based binder A having a weight average Mw of 50,000 g/mol or less, such as 8000 to 50,000 g/mol, as determined in accordance with the method described under the heading "Determination Methods" herein, and wherein binder A constitutes at least 27 wt.% (dry weight) of the total polysiloxane-based binder system;
(b) at least one amidine or amine compound having a molecular weight of 1000 g/mol or less;
   wherein the at least one amidine compound is an amidine of formula: 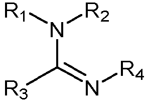
   wherein R₁, R₂, R₃, R₄ are each independently selected from hydrogen, monovalent organic groups, monovalent heteroorganic groups, and combinations thereof,
   wherein any two or more of R₁, R₂, R₃, R₄ optionally can be bonded together to form a ring structure; and
   wherein the at least one amine compound is an aminosilane.

Viewed from another aspect the invention provides a fouling release coating composition, free of tin compounds, comprising
(a) a polysiloxane-based binder system comprising at least one curable polysiloxane-based binder A having a viscosity of 2,800 mPas or less, such as 300 to 2,800 mPa, as determined in accordance with the method described under the heading "Determination Methods" herein, and wherein binder A constitutes at least 27 wt.% (dry weight) of the total polysiloxane-based binder system;
(b) at least one amidine or amine compound having a molecular weight of 1000 g/mol or less;
   wherein the at least one amidine compound is an amidine of formula: 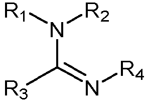
   wherein R₁, R₂, R₃, R₄ are each independently selected from hydrogen, monovalent organic groups, monovalent heteroorganic groups, and combinations thereof,
   wherein any two or more of R₁, R₂, R₃, R₄ optionally can be bonded together to form a ring structure; and
   wherein the at least one amine compound is an aminosilane.

Viewed from another aspect the invention provides a fouling release coating composition free of tin compounds comprising:
(a) a polysiloxane-based binder system comprising at least two different curable polysiloxane-based binders A and B wherein the weight average Mw of binder A is 50,000 g/mol or less and the weight average Mw of binder B is 55,000 g/mol or more, as determined in accordance with the method described under the heading "Determination Methods" herein, and wherein binder A constitutes at least 27 wt.% (dry weight) of the total polysiloxane-based binder system;
(b) at least one amidine or amine compound having a molecular weight of 1000 g/mol or less;
   wherein the at least one amidine compound is an amidine of formula: 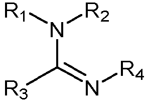
   wherein R₁, R₂, R₃, R₄ are each independently selected from hydrogen, monovalent organic groups, monovalent heteroorganic groups, and combinations thereof,
   wherein any two or more of R₁, R₂, R₃, R₄ optionally can be bonded together to form a ring structure; and
   wherein the at least one amine compound is an aminosilane.

Viewed from another aspect the invention provides a fouling release coating composition free of tin compounds comprising:
(a) a polysiloxane-based binder system comprising at least two different curable polysiloxane-based binders A and B wherein the viscosity of binder A is 2,800 mPas or less and the viscosity of binder B is 3500 mPas or more, as determined in accordance with the method described under the heading "Determination Methods" herein, and wherein binder A constitutes at least 27 wt.% (dry weight) of the total polysiloxane-based binder system;
(b) at least one amidine or amine compound having a molecular weight of 1000 g/mol or less;
   wherein the at least one amidine compound is an amidine of formula: 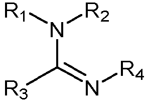
   wherein R₁, R₂, R₃, R₄ are each independently selected from hydrogen, monovalent organic groups, monovalent heteroorganic groups, and combinations thereof,
   wherein any two or more of R₁, R₂, R₃, R₄ optionally can be bonded together to form a ring structure; and
   wherein the at least one amine compound is an aminosilane.

In one embodiment, the fouling release coating composition of the invention further comprises a metal catalyst selected from compounds of iron, zirconium, lithium, potassium, bismuth, cerium and/or zinc.

It is preferred if the fouling release coating composition of the invention further comprises a metal catalyst selected from compounds of iron, zirconium, lithium, potassium, bismuth and/or zinc.

It is preferred if the fouling release coating composition of the invention further comprises a crosslinking agent.

Viewed from another aspect the invention provides a process according to claim 12. Preferred substrates are marine substrates.

Viewed from another aspect the invention provides a substrate according to claim 14.

### DEFINITIONS

As used herein the term "fouling release composition" or "fouling release coating composition" refers to a composition which, when applied to a surface, provides a fouling release surface to which it is difficult for sea organisms to permanently stick.

As used herein the term "binder system" refers to the film forming components of the composition. The polysiloxane-based binder(s) of the composition is the main binder in the binder system, i.e. it forms at least 50 wt% of the binder system, such as at least 75 wt%. As used herein, the term "binder system" does not encompass additive oils. Additive oils are not considered herein to be film-forming components.

In one embodiment the binder system consists of polysiloxane-based binder(s). The binder system may therefore consist of polysiloxane-based binder A or polysiloxane based binders A and B.

As used herein the term "paint" refers to a composition comprising the fouling release coating composition as herein described and optionally solvent which is ready for use, e.g. for spraying. Thus, the fouling release coating composition may itself be a paint or the fouling release coating composition may be a concentrate to which solvent is added to produce a paint.

As used herein the term "polysiloxane" refers to a polymer comprising siloxane, i.e. -Si-O- repeat units.

As used herein the term "polysiloxane-based binder" refers to a binder that comprises at least 50 wt%, preferably at least 60 wt% and more preferably at least 70 wt% repeat units comprising the motif -Si-O-, based on the total weight of the polymer. Polysiloxane-based binders may comprise up to 99.99 wt% repeat units comprising the motif -Si-O-, based on the total weight of the polymer. The repeat units, -Si-O- may be connected in a single sequence or alternatively may be interrupted by non-siloxane parts, e.g. organic-based parts.

As used herein the term "non-degradable polysiloxane-based binder" refers to a polysiloxane-based binder which does not undergo hydrolytic degradation or erosion in sea water.

The term free of tin compounds means that the fouling release composition of the invention contains less than 0.1 wt% of compounds comprising tin, ideally no compounds comprising tin.

As used herein the term "alkyl" refers to saturated, straight chained, branched or cyclic groups.

As used herein the term "cycloalkyl" refers to a cyclic alkyl group.

As used herein the term "alkylene" refers to a bivalent alkyl group.

As used herein the term "alkenyl" refers to unsaturated, straight chained, branched or cyclic groups.

As used herein the term "aryl" refers to a group comprising at least one aromatic ring. The term aryl encompasses fused ring systems wherein one or more aromatic ring is fused to a cycloalkyl ring. An example of an aryl group is phenyl, i.e. C₆H₅.

As used herein the term "substituted" refers to a group wherein one or more, for example up to 6, more particularly 1, 2, 3, 4, 5 or 6, of the hydrogen atoms in the group are replaced independently of each other by the corresponding number of the described substituents.

As used herein the term "arylalkyl" group refers to groups wherein the bond to the Si is via the alkyl portion.

As used herein the term "polyether" refers to a compound comprising two or more -O- linkages interrupted by alkylene units.

As used herein the terms "poly(alkylene oxide)", "poly(oxyalkylene) and "poly(alkylene glycol)" refer to a compound comprising -alkylene-O- repeat units. Typically the alkylene is ethylene or propylene.

As used herein the term wt.% is based on the dry weight of the coating composition, unless otherwise specified
As used herein the term "PDI" or polydispersity index refers to the ratio Mw/Mn, wherein Mw refers to weight average molecular weight and Mn refers to number average molecular weight. PDI is sometimes alternatively referred to as D (dispersity).

As used herein the term "volatile organic compound (VOC)" refers to a compound having a boiling point of 250 °C or less.

As used herein "antifouling agent" refers to a biologically active compound or mixture of biologically active compounds that prevents the settlement of marine organisms on a surface, and/or prevents the growth of marine organisms on a surface and/or encourages the dislodgement of marine organisms from a surface.

### Detailed description of Invention

This invention relates to a fouling release coating composition according to claim 1.

Through the use of the binder system of the invention in combination with the specified amine or amidine compound as hereinbefore defined it was possible to cure the coating composition at low temperature, such as at 0 to 10 °C, e.g. 2 to 8 °C without using a tin-catalyst.

### Polysiloxane-based binder system

The binder system in the fouling release coating composition comprises at least one curable polysiloxane-based binder component A. In one embodiment, the required polysiloxane-based binder system comprises two separate polysiloxane polymers A and B with differing molecular weights or viscosities as defined herein.

Any polysiloxane-based binder is preferably a non-degradable curable polysiloxane-based binder.

Any polysiloxane-based binder present in the coating compositions of the present invention comprises at least 50 wt% polysiloxane parts, preferably more than 60 wt% polysiloxane parts and still more preferably more than 70 wt% polysiloxane parts such as 99.99 wt% polysiloxane parts or more. Typical ranges include 50-100 wt% polysiloxane parts, 60-99.999 wt% polysiloxane parts, or 70-99.99 wt% polysiloxane parts in the polysiloxane-based binder.

The polysiloxane parts are defined as repeat units comprising the motif -Si-O- based on the total weight of the polysiloxane-based binder. The wt% of polysiloxane parts can be determined based on the stoichiometric wt ratio of starting materials in the polysiloxane synthesis. Alternatively, the polysiloxane content can be determined using analytical techniques such as IR or NMR.

Typically, the wt.% of polysiloxane parts is calculated based on the molar ratio of reactive starting materials in the polysiloxane synthesis. If a molar excess of a monomer is present in the reaction mixture then such a molar excess is not counted. Only those monomers that can react based on the stoichiometry of the reaction are counted.

Information about the wt.% polysiloxane parts in a commercially available polysiloxane-based binder is easily obtainable from the supplier.

It is to be understood that the polysiloxane-based binder can consist of a single repeating sequence of siloxane units or be interrupted by non-siloxane parts, e.g. organic parts. It is preferred if the polysiloxane-based binder contains only Si-O repeating units.

The organic parts may comprise, for example, alkylene, arylene, poly(alkylene oxide), amide, thioether or combinations thereof, preferably the organic parts may comprise, for example, alkylene, arylene, poly(alkylene oxide), amide, or combinations thereof

By curable means that the polysiloxane-based binder comprises functional groups that enable a crosslinking reaction to take place either between polysiloxane-based binder molecules or via a crosslinking agent.

Any polysiloxane-based binder is preferably an organopolysiloxane with terminal and/or pendant curing-reactive functional groups. A minimum of two curing-reactive functional groups per molecule is preferred. Examples of curing-reactive functional groups are silanol, alkoxy, acetoxy, enoxy and/or ketoxime. A preferred polysiloxane-based binder contains curing-reactive functional groups selected from silanol, alkoxy or acetoxy groups. The curing reaction is typically a condensation cure reaction. The polysiloxane-based binder optionally comprises more than one type of curing-reactive group and may be cured, for example, via both condensation cure and amine/epoxy curing.

The polysiloxane-based binder may consist of only one type of polysiloxane or be a mixture of different polysiloxanes as long as the requirements of the invention are fulfilled

A preferred polysiloxane-based binder, such as binder A and/or B present in the fouling release coating compositions of the present invention is represented by formula (D1) below: 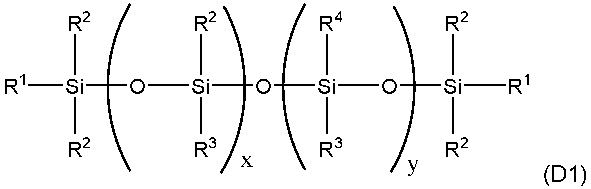 wherein
each R¹ is independently selected from a hydroxyl group, C₁₋₆-alkoxy group, or O-Si(R⁵)₃-_{z} (R⁶)_{z}
each R² is independently selected from C₁₋₁₀ alkyl, C₆₋₁₀ aryl, C₇₋₁₀ alkylaryl or C₁₋₆ alkyl substituted by poly(alkylene oxide) and/or a group as described for R¹;
each R³ and R⁴ is independently selected from C₁₋₁₀ alkyl, C₆₋₁₀ aryl, C₇₋₁₀ alkylaryl or C₁₋₆ alkyl substituted by poly(alkylene oxide);
each R⁵ is independently a hydrolysable group such as C₁₋₆ alkoxy group, an acetoxy group, an enoxy group or ketoxy group;
each R⁶ is independently selected from a C₁₋₆ alkyl group;
z is 0 or an integer from 1-2;
x is an integer of at least 2;
y is an integer of at least 2.

Preferably R¹ is selected from a hydroxyl group and O-Si(R⁵)₃-_{z}(R⁶)_{z}, wherein R⁵ is a C₁-C₆ alkoxy group, R⁶ is C₁₋₆ alkyl and z is 0 or an integer from 1-2. More preferably R¹ is selected from a hydroxyl group and O-Si(R⁵)_{3-z}(R⁶)_{z}, wherein R⁵ is a C₁-C₃ alkoxy group, R⁶ is C₁₋₃ alkyl and z is 0 or an integer from 1-2. Still more preferably R¹ is a hydroxyl group.

Preferably R² is a C₁₋₁₀ alkyl group. More preferably R² is a C₁₋₄ alkyl group, still more preferably a C₁₋₂ alkyl group, and yet more preferably a methyl group. Preferably each R² is the same.

Preferably R³ is a C₁₋₁₀ alkyl group. More preferably R³ is a C₁₋₄ alkyl group, still more preferably a C₁₋₂ alkyl group, and yet more preferably a methyl group. Preferably each R³ is the same.

Preferably R⁴ is a C₁₋₁₀ alkyl group. More preferably R⁴ is a C₁₋₄ alkyl group, still more preferably a C₁₋₂ alkyl group, and yet more preferably a methyl group. Preferably each R⁴ is the same.

Still more preferably R¹ is a hydroxyl group and R², R³ and R⁴ are each methyl groups.

Another preferred polysiloxane-based binder, such as binder A and/or B, present in the fouling release coating compositions of the present invention is represented by formula (D2) below: 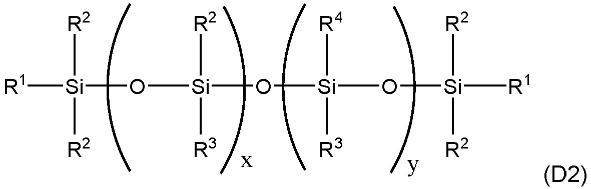 wherein
each R¹ is independently selected from a hydroxyl group, C₁₋₆-alkoxy group or O-Si(R⁵)₃-_{z} (R⁶)_{z}
each R² to R⁴ are methyl;
each R⁵ is independently a hydrolysable group such as C₁₋₆ alkoxy group, an acetoxy group, an enoxy group or ketoxy group;
each R⁶ is independently selected from a C₁₋₆ alkyl group;
z is 0 or an integer from 1-2;
x is an integer of at least 2;
y is an integer of at least 2.

Another preferred polysiloxane-based binder, such as binder A and/or B, present in the fouling release coating compositions of the present invention is represented by formula (D3) below: 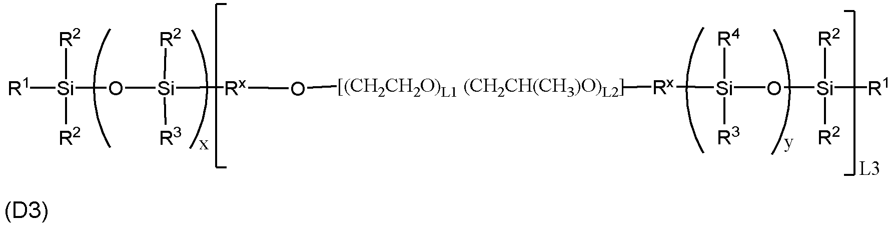 wherein R¹, R², R³, R⁴ and x and y are as defined for (D1), R^{x} is C₂₋₃ alkyl, each L1 is 0 to 50, each L2 is 0 to 50 with the proviso that L1+L2 is 2 to 50, preferably 4 to 40, more preferably 4 - 20, most preferably 4-10 and L3 is 1-200, preferably 2-100, most preferably 5-50. The polysiloxane parts must form a minimum of 50 wt% of the molecule.

Preferably the polysiloxane-based binder A or B of the present invention is represented by formula D1.

It is preferred if any polysiloxane-based binder A or B of the present invention is a polydimethylsiloxane.

The skilled person will be aware that the polysiloxane-based binder may contain low amounts of impurities, such as cyclic siloxanes, such as D4, D5 and D6 cyclosiloxanes, that are residues from polysiloxane synthesis, where the name (D4, D5, or D6) refers to the number of repeating Si-O units in the cyclic polysiloxane (i.e. 4, 5 or 6 repeating Si-O units in the cyclic polysiloxane respectively). From a health, safety, and environmental aspect, it is preferred to limit the amount of cyclic polysiloxanes present in the coating. In one preferred embodiment the polysiloxane-based binder contains less than 5% of cyclic polysiloxanes, preferable less than 2%, more preferably less than 1%. In one particularly preferred embodiment, the polysiloxane-based binder is free of cyclic polysiloxanes.

The weight average molecular weight of the polysiloxane-based binder A is preferably 50,000 g/mol or less, such as 3,500 to 50,000, preferably 8,000 to 50,000 g/mol. In a more preferred embodiment, the weight average molecular weight of the polysiloxane-based binder A is 10,000 to 48,000, more preferably 15,000 to 45,000, especially 20,000 to 40,000 g/mol.

In one embodiment, the number average molecular weight (Mn) of the polysiloxane-based binder A is less than 25,000 g/mol, such as 1,000 to 24,000 g/mol, preferably 2,000 to 24,000 g/mol. In a more preferred embodiment, the number average molecular weight of the polysiloxane-based binder A is 3,000 to 19,500 g/mol, more preferably 4,000 to 19,500 g/mol, especially 5,000 to 19,500 g/mol. Number average molecular weight (Mn) values referred to herein correspond to the experimentally obtained values, e.g. by GPC measured relative to a polystyrene standard. The method is given in the experimental section below

In one embodiment, the polysiloxane-based binder system comprises at least two polysiloxane-based binders A and B. The weight average Mw of binder B is 55,000 or more, such as 60,000 to 120,000 g/mol, still more preferably 65,000-110,000 g/mol.

The viscosity of the polysiloxane-based binder A is preferably 2,800 mPas or less, such as 400 to 2,800, more preferably 400 to 2,000, especially 500 to 1500 mPas.

In one embodiment, the polysiloxane-based binder system comprises at least two polysiloxane-based binders A and B. The viscosity of binder B is 3,500 mPas or more, such as 4,000 to 30,000 mPas, still more preferably 5,000-25,000 mPas.

The binder system forms at least 35 wt% of the fouling release coating composition (dry weight), such as at least 40 wt%, especially at least 45 wt%, e.g. 35 to 75 wt% of the fouling release coating composition (dry weight).

Binder A forms at least 27 wt% of the binder system, such as at least 40 wt% of the binder system. In some embodiments, binder A is the only polysiloxane polymer in the binder system. It may therefore form at least 80 wt% of the binder system such as at least 90 wt% of the binder system. In some embodiments the binder system may comprise 100 wt% of the binder A.

Where there are two binders it is preferred that each binder forms at least 27 wt% of the binder system, preferably each forms at least 40 wt% of the binder system. It is preferred that the ratio of binder A to binder B is in the range of 30:70 to 70:30, preferably 40:60 to 60:40, more preferably 45:55 to 55:45.

Alternatively viewed, each binder forms at least 20 wt% of the fouling release coating composition.

Where a mixture of binders A and B are employed, it is preferred if the PDI of the binder mixture is at least 2.5, such as 2.5 to 10, especially 3.0 to 8.0.

Where a mixture of binders A and B are employed in a binder system, it is preferred if the PDI of the binder system is at least 2.5, such as 2.5 to 10, especially 3.0 to 8.0.

Where a mixture of binders A and B are employed in a binder system it is preferred if the viscosity of the binder system is 400 to 30000 mPas, more preferably 1000 to 25 000 mPas, even more preferred 2000 to 15 000 mPas, such as 2500 to 11000 mPas.

Where a mixture of binders A and B are employed in a binder system it is preferred if the weight average molecular weight of the binder system is 25,000 - 100,000 g/mol, more preferred 30,000 - 80,000, even more preferred 40,000 - 80,000 g/mol. Where a mixture of binders A and B are employed in a binder system and where the weight average molecular weight of the binder system is more than 50,000 then it is also preferred if the PDI of the binder system is at least 2.5.

In one embodiment the binder system of the invention might comprise at least one polysiloxane binder A which has a PDI of 2.5 or more, such as 2.5 to 10, especially 3.0 to 8.0. Preferably the polysiloxane binder comprises two different polysiloxanes.

Where there is one binder it is preferred if that binder forms at least 60 wt% of the binder system, preferably at least 80 wt% of the binder system. Alternatively viewed, the binder A forms at least 40 wt% of the fouling release coating composition.

### Hydrophilic modified polysiloxane

The coating composition of the invention may additionally comprise a hydrophilic modified polysiloxane. It will be appreciated that this component is different from the polysiloxane binder components A and B discussed above..

It should be understood that the hydrophilic modified polysiloxane does not contain silicone reactive groups such as Si-OH groups, Si-OR (alkoxy) groups etc. that can react with the binder or the cross-linker (if present) at relevant curing temperatures (0 - 40 °C), hence the hydrophilic-modified polysiloxane is intended to be non-reactive in the curing reaction, in particular with respect to the binder components. This component is not regarded as part of the binder system.

Hydrophilic-modified polysiloxanes are widely used as surfactants and emulsifiers due to the content of both hydrophilic and lipophilic groups in the same molecule. A hydrophilic modified polysiloxane according to the present invention is a polysiloxane that is modified with hydrophilic groups to make it more hydrophilic compared to the corresponding unsubstituted polysiloxane having the same number of polysiloxane units. The hydrophilicity can be obtained by modification with hydrophilic groups such as ethers (e.g. polyoxyalkylene groups such as polyethylene glycol and polypropylene glycol), alcohols (e.g. poly(glycerol), amides (e.g. pyrroliodone, polyvinylpyrrolidone, (meth)acrylamide) acids (e.g. carboxylic acids, poly (meth) acrylic acid), amines (e.g. polyvinylamine, (meth) acrylic polymers comprising amine groups). Typically, the hydrophilic-modified polysiloxane is an oil.

In one preferred embodiment the hydrophilic groups are non-ionic.

'Non-ionic' herein means that the hydrophilic-modified polysiloxane does not contain any salt moieties; in particular, it typically does not contain any metal cations.

The hydrophilicity of non-ionic hydrophilic modified polysiloxanes can be determined in accordance with the HLB (hydrophilic-lipophilic balance) parameter. If the hydrophilic modified polysiloxane of the present invention is non-ionic, the HLB (hydrophilic-lipophilic balance) is in the range 1-12, preferably 1.0-10, more preferably 1.0-8.0, most preferably 2.0-7.0. In a particular embodiment, the non-ionic hydrophilic modified polysiloxane has an HLB in the range 3.0-6.0.

The HLB is herein typically determined according to Griffin's model using the equation "wt% hydrophilic groups"/5 (Reference: Griffin, W. C. Calculation of HLB values of non-ionic surfactants, J. Soc. Cosmet. Chem. 1954, 5, 249 - 256). The HLB parameter is a well-established parameter for non-ionic surfactants and is readily available from the suppliers of commercially available hydrophilic modified polysiloxanes. The higher surfactant HLB value, the more hydrophilic it is. By wt% hydrophilic groups means the wt% of hydrophilic groups in the hydrophilic modified polysiloxane.

One function of the hydrophilic modified polysiloxane is to facilitate the dissolution and transport of any biocide to the surface of the coating film. In addition, it is also well known that formation of a hydrated layer at the coating-water interphase is important for the fouling protection performance.

If the hydrophilicity of the hydrophilic modified polysiloxane is too high, for example due to a high amount of hydrophilic groups in the molecule, this could lead to an early depletion of the biocide(s) and the hydrophilic modified polysiloxane due to a too high leaching rate. A high hydrophilicity will also give poor compatibility with the polysiloxane based binder matrix, especially if high oil amounts (more than 10 wt.%) are used, giving poor film homogeneity and poor adhesion.

The ways to control the leach rate of the biocide and the hydrophilic modified polysiloxane include the molecular weight of the hydrophilic modified polysiloxane, the hydrophilicity and the miscibility with the binder. A very low molecular weight hydrophilic modified polysiloxane tends to allow a high leach rate, while too high molecular weight may not allow the leaching of the biocide and the hydrophilic modified polysiloxane to be of the desired rate.

Hence, in a preferred embodiment, the hydrophilic modified polysiloxane has a number average molecular weight (Mn) in the range of 500-18,000 g/mol, such as in the range of 1000-16,000 g/mol, particularly in the ranges 2000-15,050 g/mol or 4000-15,050 g/mol . Further suitable Mn ranges for the hydrophilic modified polysiloxane include 500-15,000 g/mol, 1,000-13,000 g/mol or 3,000-10,000 g/mol. Number average molecular weight (Mn) values referred to herein correspond to the experimentally obtained values, e.g. by GPC measured relative to a polystyrene standard. The method is given in the experimental section below.

In a preferred embodiment, the hydrophilic modified polysiloxane has a weight average molecular weight (Mw) of 1,000-50,000 g/mol, preferably in the ranges of 2,000-45,000 g/mol, 3,000-42,000 g/mol, 4,000-40,000 g/mol, or 5,000-40,000 g/mol. Further suitable ranges include 5,000-30,000 g/mol, e.g. 5,000-25,000 g/mol or 10,000-20,000 g/mol. Weight average molecular weight (Mw) values referred to herein correspond to the experimentally obtained values, e.g. by GPC measured relative to a polystyrene standard. The method is given in the experimental section below.

It is also preferred if the hydrophilic modified polysiloxane has a viscosity in the range of 20-4,000 mPa-s, such as in the range of 30-3,000 mPa-s, in particular in the range of 50-2,500 mPa-s, when measured according to the method given in the experimental section.

The hydrophilic modified polysiloxane may be included in the coating composition in an amount of 1.0 to 30 wt% by dry weight, preferably 2.0 to 20 wt% by dry weight, further preferred 4 to 15 wt% by dry weight. Where there are two or more different types of hydrophilic modified polysiloxanes, these amounts refer to the total sum of hydrophilic modified polysiloxane components.

Of particular interest are those hydrophilic-modified polysiloxanes in which the relative weight of the hydrophilic moieties is 5% or more of the total weight (e.g. 5-60%), such as 6% or more (e.g. 6-50%), in particular 10% or more (e.g. 10-40%) of the total weight of the hydrophilic-modified polysiloxane.

The wt.% of the hydrophilic moieties can be calculated based on the stoichiometric ratio of starting materials in the hydrophilic modified polysiloxane synthesis, or it can be determined using analytical techniques such as IR or NMR.

If there is a molar excess of a reactant then such a molar excess is not counted when determining the wt.% of hydrophilic moieties. Only those monomers that can react based on the stoichiometry of the reaction are counted.

The hydrophilic modified polysiloxane may contain low amounts of impurities, such as cyclic siloxanes, such as D4, D5 and D6 cyclosiloxanes, that are residues from polysiloxane synthesis, where the name (D4, D5 and D6) refers to the number of repeating Si-O units in the cyclic polysiloxane (i.e. 4, 5 or 6 repeating Si-O units in the cyclic polysiloxane respectively). From a health, safety, and environmental aspect it is preferred to limit the amount of cyclic polysiloxanes present in the coating composition. In one preferred embodiment, the hydrophilic modified polysiloxane contains less than 5% of cyclic polysiloxanes, preferable less than 2%, more preferably less than 1%. In one particularly preferred embodiment, the hydrophilic modified polysiloxane is free of cyclic polysiloxanes.

In one preferred embodiment the hydrophilic modified polysiloxane is a polyether modified polysiloxane.

Preferably, the polyether groups include at least 3 repeating units, such as at least 5 repeating units. In many interesting embodiments, the oligomers or polymers include 5-100 repeating units, such as 5-50, or 8-50, or 8-20 repeating units.

In some preferred embodiments, the polyether groups (I.e. oligomeric or polymeric groups) have a number average molecular weight (n) in the range of 100-2500 g/mol, such as in the range of 200-2000 g/mol, in particular in the range of 300-2000 g/mol, or in the range of 400-1000 g/mol.

Of particular interest are those polyether-modified polysiloxanes in which the relative weight of the polyether moieties is 5% or more of the total weight (e.g. 5-60%), such as 6% or more (e.g. 6-50%), in particular 10% or more (e.g. 10-40%) of the total weight of the polyether-modified polysiloxane.

In one variant hereof, the polyether-modified polysiloxane is a polysiloxane having grafted thereto poly(oxyalkylene) chains. An illustrative example of the structure of such polyether-modified polysiloxane is formula (A): 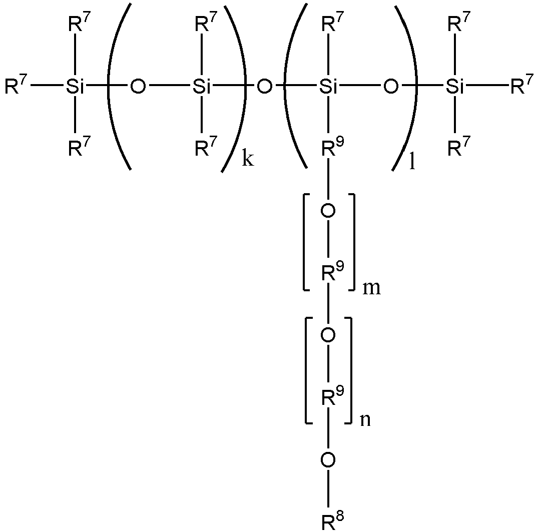 wherein each R⁷ is independently selected from C₁₋₅-alkyl (including linear or branched hydrocarbon groups) and aryl (e.g. phenyl (-C₆H₅)), in particular methyl;
each R⁸ is independently selected from -H, C₁₋₄-alkyl (e.g. -CH₃, -CH₂CH₃,-CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, - C(=O)CH₂CH₃ and -C(=O)CH₂CH₂CH₃), in particular -H, methyl and -C(=O)CH₃ ;
each R⁹ is independently selected from C₂₋₅-alkylene (e.g. -CH₂CH₂-,-CH₂CH(CH₃), -CH₂CH₂CH₂-, -CH₂CH₂CH₂CH₂-, -CH₂CH(CH₂CH₃)-), arylene (e.g. 1,4-phenylene) and C₂₋₅-alkylene substituted with aryl (e.g. 1-phenyl ethylene), in particular from C₂₋₅-alkylene such as -CH₂CH₂- and -CH₂CH(CH₃)-);
k is 0-240, I is 1-60 and k+I is 1-240; and
n is 0-50, m is 0-50 and m+n is 1-50.

In particular R⁷ is methyl;
each R⁸ is independently selected from -H or C₁₋₄-alkyl or -C(=O)CH₃ ;
each R⁹ is -CH₂CH₂-, or -CH₂CH₂CH₂-, or -CH₂CH(CH₃)-);
k is 0-240, I is 1-60 and k+I is 1-240; and
n is 0-50, m is 0-50 and m+n is 1-50.

It is preferred if all R⁷ groups are the same.

Examples of commercially available polyether-modified polysiloxanes of this type are KF352A, KF353, KF945, KF6012, KF6017 from ShinEtsu. XIAMETER OFX-5220, DOWSIL OFX-5247, XIAMETER OFX-5329, XIAMETER OFX-5330 from DOW.

In another variant hereof, the polyether-modified polysiloxane is a polysiloxane having incorporated in the backbone thereof poly(oxyalkylene) chains. An illustrative example of the structure of such hydrophilic-modified polysiloxanes is formula (B): 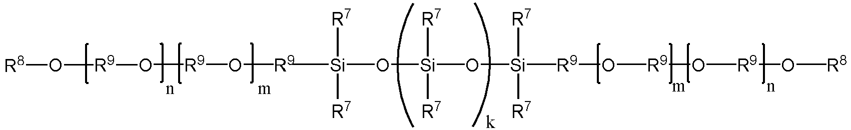 wherein each R⁷ is independently selected from C₁₋₅-alkyl (including linear or branched hydrocarbon groups) and aryl (e.g. phenyl (-C₆H₅)), in particular methyl;
each R⁸ is independently selected from -H, C₁₋₄-alkyl (e.g. -CH₃, -CH₂CH₃,-CH₂CH₂CH -CH(CH₃)₂, -CH₂CH₂CH₂CH₃), phenyl (-C₆H₅), and C₁₋₄-alkylcarbonyl (e.g. -C(=O)CH₃, C(=O)CH₂CH₃ and -C(=O)CH₂CH₂CH₃), in particular -H, methyl and -C(=O)CH₃;
each R⁹ is independently selected from C₂₋₅-alkylene (e.g. -CH₂CH₂-,-CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅-alkylene substituted with aryl (e.g. 1-phenyl ethylene), in particular from C₂₋₅-alkylene such as -CH₂CH₂ - and -CH₂CH(CH₃)-) ;
k is 0-240;
and n is 0-50, m is 0-50 and m+n is 1-50.

In particular, wherein R⁷ is methyl;
each R⁸ is independently selected from -H or C₁₋₄-alkyl or -C(=O)CH₃;
each R⁹ is -CH₂CH₂-, -CH₂CH(CH₃)-, or -CH₂CH₂CH₂-;
k is 0-240;
and n is 0-50, m is 0-50 and m+n is 1-50.

It is preferred if all R⁷ groups are the same.

Commercially available hydrophilic-modified polysiloxanes of this type are DOWSIL 2-8692 and XIAMETER OFX-3667 from DOW.

In still another variant, the polyether-modified polysiloxane is a polysiloxane having incorporated in the backbone thereof polyoxyalkylene chains and having grafted thereto polyoxyalkylene chains. An illustrative example of the structure of such hydrophilic- modified polysiloxanes is formula (C) : 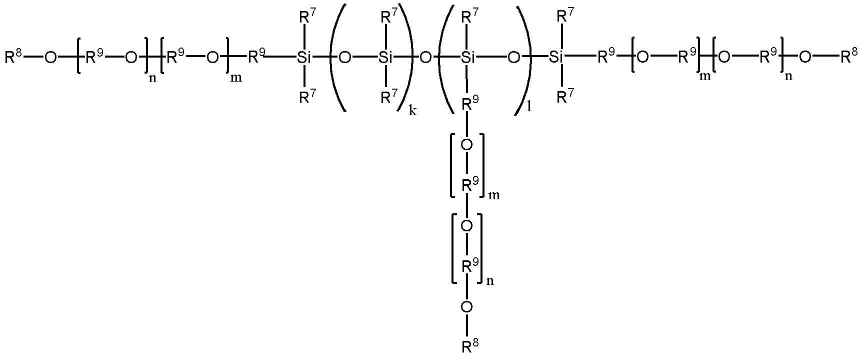 wherein each R⁷ is independently selected from C₁₋₅-alkyl (including linear or branched hydrocarbon groups) and aryl (e.g. phenyl (-C₆H₅)), In particular methyl;
each R⁸ is independently selected from -H, C₁₋₄-alkyl (e.g. -CH₃, -CH₂CH₃,-CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, - C(=O)CH₂CH₃ and -C(=O)CH₂CH₂CH₃), in particular -H, methyl and -C(=O)CH₃;
each R⁹ is independently selected from C₂₋₅-alkylene (e.g. -CH₂CH₂-,-CH₂CH(CH₃) -, -CH₂CH₂CH₂-, -CH₂CH₂CH₂CH₂-, -CH₂CH(CH₂CH₃)-), arylene (e.g. 1,4-phenylene) and C₂₋₅-alkylene substituted with aryl (e.g. 1-phenyl ethylene), in particular from C₂₋₅-alkylene such as -CH₂CH₂- and -CH₂CH(CH₃)-);
k is 0-240, I is 1-60 and k+I is 1-240;
n is 0-50, m is 0-50 and m + n is 1-50.

In particular, R⁷ is methyl;
each R⁸ is -H, or C₁₋₄-alkyl or -C(=O)CH₃;
each R⁹ is -CH₂CH₂-, -CH₂CH₂CH₂-, -or -CH₂CH(CH₃)-;
k is 0-240, y is 1-60 and x+y is 1-240;
n is 0-50, m is 0-50 and m + n is 1-50.

In the above structures (A), (B) and (C), the groups -CH₂CH(CH₃)-,-CH₂CH(CH₂CH₃)-, etc. may be present in any of the two possible orientations. Similarly, it should be understood that the segments present k and l times typically are randomly distributed in the polysiloxane structure.

In these embodiments and variants, the polyether or poly(oxyalkylene) is preferably selected from polyoxyethylene, polyoxypropylene and poly(oxyethylene-co-oxypropylene), which sometimes are referred to as polyethylene glycol, polypropylene glycol and poly(ethylene glycol-co-propylene glycol). Hence, in the above structures (A), (B) and (C), each R⁹ linking two oxygen atoms is preferably selected from -CH₂CH₂- and -CH₂CH(CH₃)-, whereas each R⁹ linking a silicon atom and an oxygen atom preferably is selected from C₂₋₅-alkyl.

In some embodiments of the above structures (A), (B) and (C), R⁸ is preferably not hydrogen.

It should be understood that the one or more polyether modified polysiloxanes may be of different types, e.g. two or more of the types described above.

In another preferred embodiment the hydrophilic modified polysiloxane comprises polyglycerol groups or pyrrolidone groups.

### Crosslinking and/or curing agent

The polysiloxane-based binder of the present invention is curable and contains curing-reactive functional groups such as silanol, alkoxysilane, ketoxime, and/or alkoxy groups. Preferably the polysiloxane-based binder contains at least two curing-reactive functional groups. Optionally the polysiloxane-based binder comprises more than one type of curing-reactive functional group. Preferably the polysiloxane-based binder comprises a single type of curing-reactive functional group. The appropriate crosslinking and/or curing agents are chosen depending on the curing-reactive functional groups present in the polysiloxane-based binder.

In preferred polysiloxane-based binders the curing-reactive functional groups are silanol and/or alkoxysilane. In still further preferred polysiloxane-based binders the curing-reactive functional groups are silanol,

It may be necessary to add a crosslinker to obtain the desired crosslinking density. If the curing-reactive functional groups are silanol, a preferred crosslinking agent is an organosilicon compound represented by the general formula shown below, a partial hydrolysis-condensation product thereof, or a mixture of the two:

R_{d}-Si-K_{4-d}

wherein,
each R is independently selected from a monovalent hydrocarbon group of 1 to 6 carbon atoms, C₁₋₆ alkyl substituted by poly(alkylene oxide) or a polysiloxane of the structure (O-(CR^{D}₂)_{r'})_{r1'} - (O-(CR^{D}₂)_{s'})_{s1'}-(Si (R^{P}P)₂-O)ₜ-Si(R^{PP})₃; wherein r', r1', s' and s1' is an integer from 0-10, each R^{D} is independently selected from H or C₁₋₄ alkyl, each R^{PP} is independently selected from C₁₋₁₀ alkyl, C₆₋₁₀ aryl, C₇₋₁₀ alkylaryl and t' is an integer from 1 to 50.;
each K is independently selected from a hydrolysable group such as an alkoxy group; and d is 0, 1 or 2, more preferably 0 or 1.

Preferred crosslinkers of this type include tetraethoxysilane, vinyltris(methylethyloximo)silane, methyltris(methylethyloximo)silane, vinyltrimethoxysilane, methyltrimethoxysilane and vinyltriisopropenoxysilane as well as hydrolysis-condensation products thereof.

If the curing-reactive functional groups are di or tri-alkoxy, a separate crosslinking agent is generally not required.

The crosslinking agent is preferably present in amount of 0-10 wt% of the total dry weight of the coating composition, preferably 2.0 to 8.0 wt%. Suitable crosslinking agents are commercially available, such as Silicate TES-40 WN from Wacker and Dynasylan A from Evonik.

This component is not regarded as part of the binder system.

### Catalyst Component (B)

In order to assist the curing process, the coating composition of the invention comprises an organic catalyst component (B) which is a low molecular weight amidine of formula: 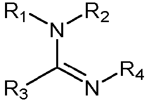
wherein R₁, R₂, R₃, R₄ are each independently selected from hydrogen, monovalent organic groups, monovalent heteroorganic groups, and combinations thereof,
and wherein any two or more of R₁, R₂, R₃, R₄ optionally can be bonded together to form a ring structure; or
a low molecular weight amine compound which is as an aminosilane. The term low molecular weight means that its molecular weight is less than 1000g/mol, such as 50 to 500 g/mol, preferably 100 to 400g/mol. In a preferred embodiment, the low molecular weight amidine or low molecular weight amine compound is not guanidine or a guanidine derivative. In a more preferred embodiment, the fouling release coating composition disclosed herein is free from any guanidine-based catalyst.

Guanadine derivatives are compounds comprising the motif:

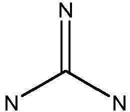

Suitable amidines are compounds comprising the motif:

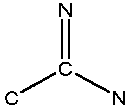

Preferably the amidine is represented by the following general formula: 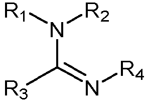
wherein R₁, R₂, R₄ are each independently selected from hydrogen, monovalent organic groups, monovalent heteroorganic groups, and combinations thereof;
R₃ is a monovalent organic group, monovalent heteroorganic groups, and combinations thereof;
and/or wherein any two or more of R₁, R₂, R₃, R₄ optionally can be bonded together to form a ring structure.
R₁, R₂ and R₄ are preferably hydrogen or C1-6 alkyl or phenyl groups.
R₃ is C₁₋₆ alkyl or phenyl groups.

Still more preferably R₂+R₄ taken together form a ring and/or R₁+R₃ taken together form a ring. Such rings are preferably aliphatic 5-7 membered rings.

Preferred options include cyclic amidines, preferably bicyclic amidines such as 1,8-diazabicyclo-5.4.0-7-undecene (DBU)). The chemical structure of DBU is presented below:

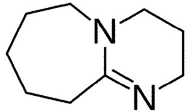

Preferred aminosilanes are aminoalkyltrialkoxysilane such as 3-aminopropyltriethoxysilane or 3-aminopropyltrimethoxy silane, or bis(alkyltrialkoxysilyl)amine preferably comprises bis(3-propyltrimethoxysilyl)amine or bis(3-propyltriethoxysilyl)amine. Another option is N,N-dibutylaminomethyl-triethoxysilane.

Suitable aminosilanes are of general formula (I) or (II)

(I) Y-R_{(4-z)}SiX_{z}

wherein z is an integer from 1 to 3,

   (II) Y-R_{(3-y)}R¹SiX_{y}
wherein y is an integer from 1 to 2,
each R is a hydrocarbyl group having 1 to 12 C atoms optionally containing an ether or amino linker,
R¹ is a hydrocarbyl group having 1 to 12 C atoms;
each X independently represents an alkoxy group.
Y is an amino bound to R.

The Y group can bind to any part of the chain R.

The amino groups are preferably N-di-C1-6-alkyl or NH₂.

It is especially preferred if X is a C1-6 alkoxy group, especially methoxy or ethoxy group. It is also especially preferred if there are two or three alkoxy groups present. Thus, z is ideally 2 or 3, especially 3.

Subscript y is preferably 2.

R¹ is preferably C1-4 alkyl such as methyl.

R is a hydrocarbyl group having up to 12 carbon atoms. By hydrocarbyl is meant a group comprising C and H atoms only. It may comprise an alkylene chain or a combination of an alkylene chain and rings such as phenyl or cyclohexyl rings. The term "optionally containing an ether or amino linker" implies that the carbon chain can be interrupted by a -O- or -NH- group in the chain.

R is preferably an unsubstituted (other than Y obviously), unbranched alkyl chain having 2 to 8 C atoms.

A preferred silane general formula is therefore of structure (III)

(III) Y'-R'(_{4-z'})SiX'_{z}

wherein z' is an integer from 2 to 3,
R' is an unsubstituted, unbranched alkyl chain having 2 to 8 C atoms
optionally containing an ether or amino linker,
Y' is an amino functional group bound to the R' group, and
X' represents an alkoxy group.

Examples of such silanes are the many representatives of the products manufactured by Degussa in Rheinfelden and marketed under the brand name of Dynasylan(R)D, the Silquest(R) silanes manufactured by Momentive, and the GENOSIL(R) silanes manufactured by Wacker.

Preferred aminosilanes include aminopropyltrimethoxysilane (Dynasylan AMMO; Silquest A-I 110), aminopropyltriethoxysilane (Dynasylan AMEO) or N-(2-aminoethyl)-3-aminopropyltrimethoxysilane (Dynasylan DAMO, Silquest A-I 120), N-(2-aminoethyl)-3-aminopropyltriethoxysilane, triamino- functional trimethoxysilane (Silquest A- 1130), bis(gamma- trimethoxysilylpropyl)amine (Silquest A-I 170), N-ethyl-gamma- aminoisobytyltrimethoxy silane (Silquest A-Link 15), N-phenyl-gamma- aminopropyltrimethoxysilane (Silquest Y-9669), 4-amino-3,3-dimethylbutyltrimethoxysilane (Silquest Y-I 1637), (N-cyclohexylaminomethyl)triethoxysilane (Genosil XL 926), (N-phenylaminomethyl)trimethoxysilane (Genosil XL 973), and mixtures thereof.

Other specific silanes of interest include 3 -Aminopropyltriethoxysilane, 3 - Aminopropyltrimethoxysilane, N-(Aminoethyl)-aminopropyltrimethoxysilane H₂NCH₂CH₂NHCH₂CH₂CH ₂Si(OCH₃)₃, 3-aminopropylmethyldiethoxysilane, 3-(2-aminoethylamino)propylmethyldimethoxysilane (H₂NCH₂CH₂NHCH₂CH₂CH₂SiCH₃(OCH₃)₂).

The amount of component (B) present in the coating composition may be present in an amount of 0.05 to 5.0 wt%, preferably 0.1 to 4.0 wt.%, such as 0.25 to 4.0 wt.%, more preferred 0.5 to 3.0 wt.% of the coating composition (dry weight).

This component is not regarded as part of the binder system.

### Metal catalyst

In order to assist the curing process, increase the robustness and ensure appropriate pot-life, the coating composition of the invention preferably comprises a metal catalyst. Representative examples of catalysts that can be used include Zn, Li, K, Bi, Fe, Ce or Zr containing catalysts, e.g. salts and organometallic complexes thereof. The salts preferably are salts of long-chain carboxylic acids and/or chelates or organometal salts.

The metal catalysts are preferably bismuth(III), iron(II), iron(III), zinc(II), zirconium(IV), cerium(III), potassium or lithium compounds, bismuth (III) and lithium being particularly preferred. Zinc containing catalysts are also especially preferred.

Examples of anionic organic radicals include methoxide, ethoxide, n-propoxide, isopropoxide, n-butoxide, isobutoxide, sec-butoxide, tert-butoxide, triethanolaminate, and 2-ethylhexyloxide radicals; carboxylate radicals such as the acetate, formate, n-octoate, 2-ethylhexanoate, 2,4,4-trimethylpentanoate, 2,2,4-trimethylpentanoate, 6-methylheptanoate, oleate, ricinoleate, palmitate, hexoate, hexadecanate, 2-ethylhexanoate, benzoate, 1,4-dibenzoate, stearate, acrylate, laurate, methacrylate, 2-carboxyethylacrylate, oxalate, 10-undecylenate, dodecanoate, citrate, 3-oxopentanoate, 3-oxobutanoate, and neodecanoate radicals; amide radicals such as the dimethylamide, diethylamide, ethylmethylamide, and dipropylamide radicals; the lactate radical; trialkylsiloxy radicals, more particularly trimethylsiloxy and triethylsiloxy radicals, and also carbonate radicals (O-CO-OR') and carbamate radicals (O-CO-NR'2), where R' may be identical or different and are monovalent or divalent, optionally substituted hydrocarbon radicals and, furthermore, may be hydrogen, trimethoxysilylpropyl, triethoxysilylpropyl, dimethoxymethylsilylpropyl, diethoxymethylsilylpropyl, N-[3-(trimethoxysilyl)propyl]-2-aminoethyl, N-[3-(triethoxysilyl)propyl]-2-aminoethyl, N-[3-(dimethoxymethylsilyl)propyl]-2-aminoethyl or N-[3-(diethoxymethylsilyl)propyl]-2-aminoethyl radicals.

Examples of metal salt compounds are bismuth(III) 2-ethylhexanoate, bismuth(III) neodecanoate, bismuth(III) acetate, bismuth (III) octanoate, iron(II) acetate, iron(III) tert-butoxide, iron(III) citrate, iron(II) lactate, iron(II) oxalate, iron(III) oxalate, iron(III) 2-ethylhexanoate, zinc(II) acetate, zinc(II) formate, zinc(II) benzoate, zinc(II) 2-ethylhexanoate, zinc(II) n-octoate, zinc(II) stearate, zinc(II) ethoxide, zinc(II) acrylate, zinc(II) methacrylate, zinc (II) naphthenate, zinc(II) oxalate, zinc(II) 10-undecylenate, zinc(II) 3-oxopentanoate, zinc(II) 3-oxobutanoate, zirconium(IV) acetate, zirconium(IV) 2-ethylhexanoate, zirconium(IV) lactate, zirconium(IV) n-butoxide, zirconium(IV) tert-butoxide, zirconium(IV) isopropoxide, zirconium(IV) n-propoxide, zirconium(IV) 2-carboxyethylacrylate, zirconium(IV) tetrakis(diethylamide), zirconium(IV) tetrakis(ethylmethylamide), zirconium(IV) bis(diethylcitrate)-di-n-propoxide. The use of cerium neodecanoate is also envisaged.

Examples of metal chelate compounds bismuth(III) 2,2,6,6-tetramethyl-3,5-heptanedionate, bismuth(III) acetylacetonate, iron(II) acetylacetonate, iron(III) acetylacetonate, iron(III) 2,2,6,6-tetramethyl-3,5-heptanedionate, iron(II) 2,2,6,6-tetramethyl-3,5-heptanedionate, zinc(II) hexafluoroacetylacetonate, zinc(II) 1,3-diphenyl-1,3-propanedionate, zinc(II) 1-phenyl-5-methyl-1,3-hexanedionate, zinc(II) 1,3-cyclohexanedionate, zinc(II) 2-acetylcyclohexanonate, zinc(II) 2-acetyl-1,3-cyclohexanedionate, zinc(II) ethylsalicylate, zinc(II) diethylmalonate, zinc(II) ethylacetoacetate, zinc(II) benzylsalicylate, zinc(II) acetylacetonate, and zinc(II) 2,2,6,6-tetramethyl-3,5-heptanedionate, tin(II) acetylacetonate, zirconium(IV) acetylacetonate, zirconium(IV) 2,2,6,6-tetramethyl-3,5-heptanedionate, zirconium(IV) trifluoroacetylacetonate, and zirconium(IV) hexafluoroacetylacetonate.

Examples of suitable lithium catalysts are lithium 2-ethylhexanoate and lithium neodecanoate. Example of commercially available lithium catalyst includes Borchers Deca Lithium 2 manufactured by Borchers sas.

Examples of suitable potassium catalysts are potassium 2-ethylhexanoate and potassium neodecanoate. Examples of commercially available potassium catalysts include 15% Potassium Hex-Cem^{®} EU manufactured by Borchers sas and TIB KAT K30 from TIB Chemicals.

Examples of suitable zinc catalysts are zinc 2-ethylhexanoate, zinc naphthenate and zinc stearate. Examples of commercially available zinc catalysts include K-KAT XK-672, K-KAT XK-661 and K-KAT670 from King Industries and Borchi Kat 22 from Borchers.

Examples of suitable bismuth catalysts are organobismuth compounds such as bismuth 2-ethylhexanoate, bismuth octanoate and bismuth neodecanoate. Examples of commercial organobismuth catalysts are Borchi Kat 24 and Borchi Kat 315 from Borchers. K-KAT XK-651 from King Industries, Reaxis C739E50 from Reaxis and TIB KAT 716 from TIB Chemicals.

Other suitable catalysts are iron catalysts such as iron stearate and iron 2-ethylhexanoate, and zirconium catalysts such as zirconium naphthenate, tetrabutyl zirconate, tetrakis(2- ethylhexyl) zirconate, triethanolamine zirconate, tetra(isopropenyloxy)-zirconate, zirconium tetrabutanolate, zirconium tetrapropanolate and zirconium tetraisopropanolate. Further suitable catalysts are zirconate esters.

In one preferred embodiment the metal additive is a bismuth and/or lithium catalyst.

Preferably the metal catalyst is present in the coating composition of the invention in an amount of 0.1 to 5.0 wt% based on the total dry weight of the coating composition, more preferably 0.5 to 4.0 wt%.

This component is not regarded as part of the binder system.

### Antifouling agent

The fouling release coating composition of the present invention may comprise an antifouling agent.

The terms antifouling agent, biologically active compounds, antifoulant, biocide, toxicant are used in the industry to describe known compounds that act to prevent marine fouling on a surface. If present, the antifouling agent may be inorganic, organometallic or organic. Preferably, if present the antifouling agent is an organometallic antifouling agent. Suitable antifouling agents are commercially available.

Examples of inorganic antifouling agents include copper and copper compounds such as copper oxides, e.g. cuprous oxide and cupric oxide; copper alloys, e.g. copper-nickel alloys; copper salts, e.g. copper thiocyanate and copper sulphide.

Examples of organometallic antifouling agents include zinc pyrithione; organocopper compounds such as copper pyrithione, copper acetate, copper di(ethyl 4,4,4-trifluoro acetoacetate), copper naphthenate, oxine copper, copper nonylphenolsulfonate, copper bis(ethylenediamine)bis(dodecylbe nzensulfonate) and copper bis(pentachlorophenolate); dithiocarbamate compounds such as zinc bis(dimethyldithiocarbamate) [ziram], zinc ethylenebis(dithiocarbamate) [zineb], manganese ethylenebis(dithiocarbamate) [maneb] and manganese ethylene bis(dithiocarbamate) complexed with zinc salt [mancozeb].

Examples of organic antifouling agents include heterocyclic compounds such as 2-(tert-butylamino)-4-(cyclopropylamino)-6-(methylthio)-1,3,5- triazine [cybutryne], 4,5-dichloro-2-n-octyl-4-isothiazolin-3-one [DCOIT], encapsulated 4,5-dichloro-2-n-octyl-4-isothiazolin-3-one [DCOIT], 1,2-benzisothiazolin-3-one, 2-(thiocyanatomethylthio)-1,3-benzothiazole [benthiazole] and 2,3,5,6-tetrachloro-4-(methylsulphonyl) pyridine; urea derivatives such as 3-(3,4-dichlorophenyl)-1,1-dimethylurea [diuron]; amides and imides of carboxylic acids, sulphonic acids and sulphenic acids such as N-(dichlorofluoromethylthio)phthalimide, N-dichlorofluoromethylthio-N',N'-dimethyl-N-phenylsulfamide [dichlofluanid], N-dichlorofluoromethylthio-N',N'-dimethyl-N-p-tolylsulfamide [tolylfluanid] and N-(2,4,6-trichlorophenyl)maleimide; other organic compounds such as pyridine triphenylborane [TPBP], amine triphenylborane, 3-iodo-2-propynyl N-butylcarbamate [iodocarb], 2,4,5,6-tetrachloroisophthalonitrile, p-((diiodomethyl)sulphonyl) toluene and 4-bromo-2-(4-chlorophenyl)-5 - (trifluoromethyl)- 1H-pyrrole-3-carbonitrile [tralopyril] and quaternary ammonium salts.

Other examples of antifouling agents include tetraalkylphosphonium halogenides, guanidine derivatives, imidazole containing compounds such as 4-[1-(2,3-dimethylphenyl)ethyl]-1H-imidazole [medetomidine] and derivatives thereof, macrocyclic lactones including avermectins and derivatives thereof such as ivermectine, spinosyns and derivatives thereof such as spinosad, capsaicins and derivatives thereof such as phenyl capsaicin, and enzymes such as oxidase, proteolytically, hemicellulolytically, cellulolytically, lipolytically and amylolytically active enzymes.

Preferred antifouling agents are zinc pyrithione, copper pyrithione, zinc ethylenebis(dithiocarbamate) [zineb], 4,5-dichloro-2-n-octyl-4-isothiazolin-3-one [DCOIT] and encapsulated 4,5-dichloro-2-n-octyl-4-isothiazolin-3-one [DCOIT]. Particularly preferred antifouling agents are zinc pyrithione and copper pyrithione, particularly copper pyrithione.

If present, the biocide may form 1-20 % by dry weight of the total coating composition, preferably 1-15 %, 2-15 % or 3-12 % by dry weight of the total coating composition.

This component is not regarded as part of the binder system.

### Additive oil

The coating composition of the present invention optionally comprises an additive oil. Preferably the coating composition of the present invention comprises 0-30 wt% and more preferably 0.1-20 wt% additive oil, based on the dry weight of the coating composition. The hydrophilic modified polysiloxane described herein is not considered an 'additive oil'. Additive oils are therefore oils which are different to the hydrophilic modified polysiloxane described herein.

Suitable unreactive additive oils are silicone oils such as methylphenyl silicone oil, petroleum oils, polyolefin oils, polyaromatic oils, fluoro resins such as polytetra- fluoroethylene or fluid fluorinated alkyl- or alkoxy-containing polymers, or lanolin and lanolin derivatives and other sterol(s) and/or sterol derivative(s) as disclosed in WO2013024106A1 or combinations thereof. A preferred unreactive additive oil is methylphenyl silicone oil.

A further additive oil optionally present in the coating compositions of the invention is fluorinated amphiphilic polymers/oligomers as described in WO2014131695.

A suitable additive oil may also be based on methacrylate co-polymers having polysiloxane side chains and polyether or nitrogen containing hydrophilic groups such as described in WO2019101912 A1 and WO2019101920 A1.

This component is not regarded as part of the binder system.

### Pigments

The coating composition of the invention preferably comprises one or more pigments. The pigments may be inorganic pigments, organic pigments or a mixture thereof. Inorganic pigments are preferred. The pigments may be surface treated.

Representative examples of pigments include black iron oxide, red iron oxide, yellow iron oxide, titanium dioxide, zinc oxide, carbon black, graphite, red molybdate, yellow molybdate, zinc sulfide, antimony oxide, sodium aluminium sulfosilicates, quinacridones, phthalocyanine blue, phthalocyanine green, indanthrone blue, cobalt aluminium oxide, carbazoledioxazine, isoindoline orange, bis-acetoaceto-tolidiole, benzimidazolone, quinaphthalone yellow, isoindoline yellow, tetrachloroisoindolinone, and quinophthalone yellow, metallic flake materials (e.g. aluminium flakes). Preferred pigments are black iron oxide, red iron oxide, yellow iron oxide, phthalocyanine blue and titanium dioxide. In one preferred embodiment the titanium dioxide is surface treaded with a silicone compound, a zirconium compound or a zinc compound.

The amount of pigment present in the coating composition of the present invention is preferably 0 to 25 wt% and more preferably 0.5 to 15 wt% based on the total dry weight of the coating composition.

This component is not regarded as part of the binder system.

### Solvent

The fouling release coating composition of the present invention preferably comprises a solvent. Suitable solvents for use in the compositions of the invention are commercially available.

Examples of suitable organic solvents and thinners are aromatic hydrocarbons such as xylene, toluene, mesitylene; ketones such as methyl ethyl ketone, methyl isobutyl ketone, methyl amyl ketone, methyl isoamyl ketone, cyclopentanone, cyclohexanone; esters such as butyl acetate, tert-butyl acetate, amyl acetate, isoamyl acetate, ethylene glycol methyl ether acetate, propylene glycol methyl ether acetate; ethers such as ethylene glycol dimethyl ether, diethylene glycol dimethyl ether, dibutyl ether, dioxane, tetrahydrofuran; alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents and thinners.

The amount of solvent present in the fouling release coating compositions of the present invention is preferably as low as possible as this minimizes the VOC content. Preferably solvent is present in the compositions of the invention in an amount of 0-35 wt% and more preferably 1-30 wt% based on the total weight of the composition. The skilled man will appreciate that the solvent content will vary depending on the other components present.

This component is not regarded as part of the binder system.

### Fillers

The coating composition of the present invention optionally comprises fillers. Examples of fillers that can be used in the coating composition according to the present invention are zinc oxide, barium sulphate, calcium sulphate, calcium carbonate, silicas or silicates (such as talc, feldspar, china clay and nepheline syenite) including fumed silica, bentonite and other clays, and solid silicone resins, which are generally condensed branched polysiloxanes. Some fillers such as fumed silica may have a thickening effect on the coating composition.

Preferred fillers are fumed silica fillers. The fumed silica fillers may have an untreated surface or a hydrophobically modified surface. Preferably the fumed silica filler has a hydrophobically modified surface. Examples of commercially available fumed silica fillers are TS-610, TS-530, EH-5, H-5, and M-5 from Cabot and Aerosil^{®} R972, Aerosil^{®} R974, Aerosil^{®} R976, Aerosil^{®} R104, Aerosil^{®} R202, Aerosil^{®} R208, Aerosil^{®} R805, Aerosil^{®} R812, Aerosil^{®} 816, Aerosil^{®} R7200, Aerosil^{®} R8200, Aerosil^{®} R9200, Aerosil^{®} R711 from Evonik.

The amount of fillers present in the coating composition of the present invention is preferably 0 to 25 wt%, more preferably 0.1 to 10 wt% and still more preferably 0.15 to 5.0 wt%, based on the total dry weight of the coating composition.

This component is not regarded as part of the binder system.

### Additives

The coating composition of the present invention optionally comprises one or more additives. Examples of additives that may be present in the coating composition of the invention include reinforcing agents, thixotropic agents, thickening agents, anti-settling agents, dehydrating agents, dispersing agents, wetting agents, surfactants, binders, plasticizers, and dyes.

Examples of thixotropic agents, thickening agents and anti-settling agents are silicas such as fumed silicas, organo-modified clays, amide waxes, polyamide waxes, amide derivatives, polyethylene waxes, oxidized polyethylene waxes, hydrogenated castor oil wax and mixtures thereof. Preferably thixotropic agents, thickening agents and anti-settling agents are each present in the composition of the invention in an amount of 0-10 wt%, more preferably 0.1-6 wt% and still more preferably 0.1-2.0 wt%, based on the total dry weight of the composition.

The dehydrating agents and desiccants that may be used in the fouling release coating compositions include organic and inorganic compounds. The dehydrating agents can be hygroscopic materials that absorb water or binds water as crystal water, often referred to as desiccants. Examples of desiccants include calcium sulphate hemihydrate, anhydrous calcium sulphate, anhydrous magnesium sulphate, anhydrous sodium sulphate, anhydrous zinc sulphate, molecular sieves and zeolites. The dehydrating agent can be a compound that chemically reacts with water. Examples of dehydrating agents that reacts with water include orthoesters such as trimethyl orthoformate, triethyl orthoformate, tripropyl orthoformate, triisopropyl orthoformate, tributyl orthoformate, trimethyl orthoacetate, triethyl orthoacetate, tributyl orthoacetate and triethyl orthopropionate; ketals; acetals; enolethers; orthoborates such as trimethyl borate, triethyl borate, tripropyl borate, triisopropyl borate, tributyl borate and tri-tert-butyl borate; organosilanes such as trimethoxymethyl silane, vinyltrimethoxysilane, phenyltrimethoxysilane, tetraethoxysilane and ethyl polysilicate.

Preferably the dehydrating agent is present in the compositions of the invention in an amount of 0-5 wt%, more preferably 0.5-2.5 wt% and still more preferably 1.0-2.0 wt%, based on the total dry weight of the composition.

In a preferred embodiment the invention therefore provides a fouling release coating composition, free of tin compounds, comprising (dry weight):
(a) 30 wt% or more of a curable polysiloxane-based binder A having a weight average Mw of 50,000 g/mol or less or a viscosity of 2,800 mPas or less;
(b) 0.1 to 5.0 wt% of the at least one amidine or amine compound as hereinbefore defined.

In a preferred embodiment the invention therefore provides a fouling release coating composition, free of tin compounds, comprising (dry weight):
(a) 20 wt% or more of a curable polysiloxane-based binder A having a weight average Mw of 50,000 g/mol or less or a viscosity of 2,800 mPas or less;
(b) 20 wt% or more of a curable polysiloxane-based binder B having a weight average Mw and the weight average Mw of 55,000 g/mol or more or a viscosity of 3500 mPas or more;
(c) 0.1 to 5.0 wt% of the at least one amidine or amine compound as hereinbefore defined.

In a preferred embodiment the invention therefore provides a fouling release coating composition, free of tin compounds, comprising (dry weight):
(a) at least 40 wt% of a polysiloxane-based binder system comprising at least two different curable polysiloxane-based binders A and B wherein the weight average Mw of binder A is 50,000 g/mol or less and the weight average Mw of binder B is 55,000 g/mol or more and wherein binder A constitutes at least 27 wt.% of the total polysiloxane-based binder system; or
   at least 40 wt% of a polysiloxane-based binder system comprising at least two different curable polysiloxane-based binders A and B wherein the viscosity of binder A is 2,800 mPas or less and the viscosity of binder B is 3500 mPas or more and wherein binder A constitutes at least 27 wt.% of the total polysiloxane-based binder system; or
   at least 40 wt% of a polysiloxane-based binder system comprising at least one curable polysiloxane-based binder A having a weight average Mw of 50000 g/mol or less wherein the binder A constitutes at least 60 wt.% of the total polysiloxane-based binder system; or
   at least 40 wt% of a polysiloxane-based binder system comprising at least one curable polysiloxane-based binder A having a viscosity of less than 2,800 mPas wherein the binder A constitutes at least 60 wt.% of the total polysiloxane-based binder system;
(b) 0.1 to 5.0 wt% of the at least one amidine or amine compound as hereinbefore defined.

In a preferred embodiment the invention therefore provides a fouling release coating composition, free of tin compounds, comprising (dry weight):
(a) at least 40 wt% of a polysiloxane-based binder system comprising at least two different curable polysiloxane-based binders A and B wherein the weight average Mw of binder A is 50,000 g/mol or less and the weight average Mw of binder B is 55,000 g/mol or more and wherein binder A constitutes at least 27 wt.% of the total polysiloxane-based binder system; or
   at least 40 wt% of a polysiloxane-based binder system comprising at least two different curable polysiloxane-based binders A and B wherein the viscosity of binder A is 2,800 mPas or less and the viscosity of binder B is 3500 mPas or more and wherein binder A constitutes at least 27 wt.% of the total polysiloxane-based binder system; or
   at least 40 wt% of a polysiloxane-based binder system comprising at least one curable polysiloxane-based binder A having a Mw of 5000 g/mol or less wherein the binder A constitutes at least 60 wt.% of the total polysiloxane-based binder system; or
   at least 40 wt% of a polysiloxane-based binder system comprising at least one curable polysiloxane-based binder having a viscosity of 2,800 mPas or less wherein the binder A constitutes at least 60 wt.% of the total polysiloxane-based binder system;
(b) 0.1 to 5.0 wt% of the at least one amidine or amine compound as hereinbefore defined;
(c) 0.0 to 5.0 wt%, preferably 0.1 to 5.0 wt% of at least one metal catalyst being a salt or organometallic compound of Zn, Li, K, Fe, Bi or Zr;
(d) 0 to 30 wt%, preferably 1.0 to 30 wt% of a hydrophilic modified polysiloxane; and
(e) 0 to 8.0 wt%, preferably 2.0 to 8.0 wt% crosslinker.

### Composition and Paint

The present invention also relates to a method of preparing the fouling release coating composition as hereinbefore described wherein the components present in the composition are mixed. Any conventional production method may be used.

The composition as described herein may be prepared in a suitable concentration for use, e.g. in spray painting. In this case, the composition is itself a paint. Alternatively, the composition may be a concentrate for preparation of paint. In this case, further solvent and optionally other components are added to the composition described herein to form paint. Preferred solvents are as hereinbefore described in relation to the composition.

After mixing, and optionally after addition of solvent, the fouling release coating composition or paint is preferably filled into a container. Suitable containers include cans, drums and tanks.

The fouling release coating composition may be supplied as one-pack, as a two- pack or as a three-pack. Preferably the composition is supplied as a two-pack or as a three-pack.

When supplied as a two pack, the first container preferably comprises a polysiloxane-based binder(s) and the second container preferably comprises any curing agent and the catalyst component (B). Instructions for mixing the contents of the containers may optionally be provided. Any hydrophilic-modified polysiloxane is preferably part of the first container. Any catalyst is preferably part of the second container.

In a particular embodiment, the invention provides a kit for preparing a fouling release composition as defined herein.

The fouling release coating composition and paint of the invention preferably has a solids content of 50-99 wt%, more preferably 60-99 wt% and still more preferably 65-99 wt%.

Preferably the fouling release coating composition and paint of the invention has a content of volatile organic compounds (VOC) of 50 to 400 g/L, preferably 50 to 350 g/L, e.g. 50 to 300 g/L. VOC content can be calculated (ASTM D5201-05A) or measured (US EPA method 24 or ISO 11890-1).

The coating composition of the present invention may be applied to any pretreated coating layers designed for polysiloxane based fouling release coatings. Examples of such coating layers are epoxy anticorrosive layers and silicone containing tie-layers designed to ensure adhesion between the substrate and the final polysiloxane based fouling release layer. One example of such a tie-layer is described in WO2013/107827. Optionally the tie-layer may contain an antifouling agent.

Preferably the tie-layer has a different color to the top-layer. This makes it easier to see damage and that the right film-thickness has been applied. Preferably the tie-layer is pink, yellow or grey, most preferably the tie-layer is pink.

It is also possible to apply the coating composition according to the present invention on a substrate containing an aged anti-fouling coating layer or fouling release layer. Before the coating composition according to the present invention is applied to such an aged layer, this old layer is cleaned by high-pressure water washing to remove any fouling.

The coating composition according to the present invention may be applied in one or two or more layers. Preferably the coating composition according to the present invention is applied in one layer

The dry film thickness of each of the coating layers of the coating composition of the present invention is preferably 50-500 µm, more preferably 100 - 400 µm, most preferably 150 - 300 µm.

The fouling release coating composition of the present invention will typically be cured at a humidity of 20 - 90 %, preferably 30 - 85 %, more preferred 40 - 85 %.

The fouling release coating composition and paint of the invention can be applied to a whole or part of any article surface which is subject to marine fouling. The surface may be permanently or intermittently underwater (e.g. through tide movement, different cargo loading or swell). The article surface will typically be the hull of a vessel or surface of a fixed marine object such as an oil platform or buoy. Application of the coating composition and paint can be accomplished by any convenient means, e.g. via painting (e.g. with brush or roller) or more preferably spraying the coating onto the article. Typically the surface will need to be separated from the seawater to allow coating. The application of the coating can be achieved as conventionally known in the art. After the coating is applied, it is preferably dried and/or cured.

### Applications

The fouling release coating of the present invention is typically applied to the surface of a marine substrate, preferably the part of a marine structure which is submerged when in use. Typical marine substrates include vessels (including but not limited to boats, ships, yachts, motorboats, motor launches, ocean liners, tugboats, tankers, container ships and other cargo ships, submarines, and naval vessels of all types), pipes, shore and off-shore machinery, constructions and objects of all types such as piers, pilings, bridge substructures, water-power installations and structures, underwater oil well structures, nets and other aquatic culture installations, and buoys, etc. The surface of the substrate may be the "native" surface (e.g. the steel surface).

### Examples

### Determination Methods

### Determination of binder viscosity

The viscosity of the binders was determined in accordance with ASTM D2196 Test Method A using a Brookfield DV-I Prime digital viscometer with LV-2 or LV-4 spindle at 12 rpm. The binders were tempered to 23.0 °C ± 0.5 °C before the measurements.

### Determination of polymer average molecular weights distribution

The polymers were characterised by Gel Permeation Chromatography (GPC) measurement. The molecular weight distribution (MWD) was determined using a Malvern Omnisec Resolve and Reveal system with two PLgel 5 µm Mixed-D columns from Agilent in series. The columns were calibrated by conventional calibration using narrow polystyrene standards. The analysis conditions were as set out in table 1 below.

**Table 1**

| Detector | RI |
|---|---|
| Cell volume | 12 µl |
| Column Set | Agilent PLgel 5 µm Mixed-D, 2 columns in series |
| Mobile Phase | THF |
| Flow rate | 1 ml/min |
| Injection volume | 100 µl |
| Autosampler Temperature | 25 °C |
| Column Oven Temperature | 35 °C |
| Detector Oven Temperature | 35 °C |
| Data Processing | Omnisec 5.1 |
| Calibration standards | Agilent Polystyrene Medium EasiVials (4 ml) Red, Yellow and Green |

Samples were prepared by dissolving an amount of polymer solution corresponding to 25 mg dry polymer in 5 ml THF. The samples were kept for a minimum of 3 hours at room temperature prior to sampling for the GPC measurements. Before analysis the samples were filtered through 0.45 µm Nylon filters. The number- average molecular weight (Mn), weight-average molecular weight (Mw) and polydispersity index are reported.

### Preparation of coating compositions

The coating compositions were prepared by first mixing the components in part (A) shown in Tables 3, 4 and 5 below using a high-speed dissolver equipped with an impeller disc. The components in part (B) were mixed with the components in part (A) shortly before application of the coating.

### Curing test

Curing time was determined by using a mechanical recorder. The coating is applied to glass strip measuring 305 mm X 25 mm X 3 mm. The strips are positioned so that a stylus can be lowered into the wet film. The styluses move along the glass strips at a constant speed. Beck Koller drying time recorder (TQC Drying Time Recorder, AB3600) was set for 24 h testing time. A coating was applied at 5 °C on the glass strip with 300 µm wet film thickness. The measurements were carried out in a curing chamber at 5 °C/85% RH. The tack free time (TFT) of the foul release paint composition was the time from the application of the paint composition on the glass plate to the time when the traces of the needle were not seen. The TFT regarded as acceptable is a maximum of 4 h. The coating film is considered as cured (hard dry), when it achieves a certain hardness, no visible marks are made when the coating is firmly touched with a finger. The drying state (wet, tacky, touch dry or hard dry) was determined after 24h.The coating has to be hard dry after 24 hours to fulfil the requirements of the invention. In order for the curing to be considered as sufficient both the requirement of a TFT of maximum 4 hours and a hard-dry coating after 24 hours have to be achieved.

**Table 2**

| Drying state | Description |
|---|---|
| Wet | wet paint remains on finger |
| Tacky | semi-cured paint remains on finger |
| Touch dry | marks remain on the coating when the coating is firmly touched with a finger, but paint does not remain on the finger |
| Hard dry | no visible marks are made when the coating is firmly touched with a finger |

**Table 3 Measured molecular weights and viscosities of the binders.**

| Binder | Mn | Mw | PDI | Viscosity at 23 °C [mPas] |
|---|---|---|---|---|
| B0.5 | 8385 | 24238 | 2.891 | 440 |
| B1 | 19417 | 35629 | 1.835 | 1 000 |
| B3.5 | 30813 | 59729 | 1.938 | 3800 |
| B5.0 | 31504 | 67300 | 2.136 | 5600 |
| B20 | 46945 | 98279 | 2.093 | 22050 |
| B20/B0.5 (50:50 wt%) | 12772 | 59899 | 4.691 | 4 300 |
| B20/B1 (50:50 wt%) | 25253 | 67401 | 2.674 | 5 750 |
| B20/B5 (50:50 wt%) | 37877 | 84759 | 2.263 | 11 150 |
| B20/B0.5 (72.5:.27.5 wt%) | 19893 | 79426 | 4.144 | 10 050 |
| B20/B3.5 (72.5:27.5 wt%) | 45162 | 88875 | 1.973 | 14 150 |

**Table 4 - Components in bold are part of the binder system**

| **Example** | **1** | **2** | **3** | **4** | **5** | **6** | **7** | **8** | **9** | **10** | **C-1** | **C-2** | **C-3** | **C11** |
|---|---|---|---|---|---|---|---|---|---|---|---|---|---|---|
| *Part (A)* | | | | | | | | | | | | | | |
| **B0.5: a,ω-Hydroxypolydimethylsiloxane,** | 27.8 | 27.8 | 27.8 | 27.8 | 27.8 | 27.8 | 27.8 | 27.8 | 27.8 | 27.8 | 27.8 | 27.8 | 27.8 | 27.8 |
| **B20: α,ω-Hydroxypolydimethylsiloxane,** | 27.8 | 27.8 | 27.8 | 27.8 | 27.8 | 27.8 | 27.8 | 27.8 | 27.8 | 27.8 | 27.8 | 27.8 | 27.8 | 27.8 |
| Hydrophobic silica | 0.5 | 0.5 | 0.5 | 0.5 | 0.5 | 0.5 | 0.5 | 0.5 | 0.5 | 0.5 | 0.5 | 0.5 | 0.5 | 0.5 |
| Iron oxide red | 3.5 | 3.5 | 3.5 | 3.5 | 3.5 | 3.5 | 3.5 | 3.5 | 3.5 | 3.5 | 3.5 | 3.5 | 3.5 | 3.5 |
| Methyl phenyl polysiloxane oil (additive oil) | 15.9 | 15.9 | 15.9 | 15.9 | 15.9 | 15.9 | 15.9 | 15.9 | 15.9 | 15.9 | 15.9 | 15.9 | 15.9 | 15.9 |
| Polyether modified silicone oil (hydrophilic modified, Mw 7460 g/mol, HLB 4.7) | 3.9 | 3.9 | 3.9 | 3.9 | 3.9 | 3.9 | 3.9 | 3.9 | 3.9 | 3.9 | 3.9 | 3.9 | 3.9 | 3.9 |
| Thixotropic agent | 0.7 | 0.7 | 0.7 | 0.7 | 0.7 | 0.7 | 0.7 | 0.7 | 0.7 | 0.7 | 0.7 | 0.7 | 0.7 | 0.7 |
| Xylene | 11.7 | 11.7 | 11.7 | 11.7 | 11.7 | 11.7 | 11.7 | 11.7 | 11.7 | 11.7 | 11.7 | 11.7 | 11.7 | 11.7 |
| 1-Methoxy-2-propanol | 8.2 | 8.2 | 8.2 | 8.2 | 8.2 | 8.2 | 8.2 | 8.2 | 8.2 | 8.2 | 8.2 | 8.2 | 8.2 | 8.2 |
| Total part (A) | 100 | 100 | 100 | 100 | 100 | 100 | 100 | 100 | 100 | 100 | 100 | 100 | 100 | 100 |
| | | | | | | | | | | | | | | |
| *Part (B)* | | | | | | | | | | | | | | |
| Ethyl silicate¹ | 4.2 | 4.2 | 4.2 | 4.2 | 4.2 | 4.2 | 4.2 | 4.2 | 4.2 | 4.2 | 4.2 | 4.2 | 4.2 | 4.2 |
| Dibutyltin diacetate² | | | | | | | | | | | 0.4 | | | |
| Bismuth carboxylate³ | | | 2.0 | | 1.25 | | 0.63 | | | | | 2.0 | | |
| Lithium carboxylate⁴ | | | | 2.0 | | 1.25 | 0.63 | | | | | | 2.0 | |
| Zinc carboxylate⁵ | | | | | | | | 2.0 | 1.25 | | | | | |
| 1,8-diazabicyclo-5.4.0-7-undecene⁶ | 0.5 | | 2.0 | 2.0 | | | | 2.0 | | | | | | |
| 3-Aminopropyltriethoxysilane⁷ | | 1.0 | | | 0.75 | 0.75 | 0.75 | | 0.75 | 0.75 | | | | |
| Cerium neodecanoate⁸ | | | | | | | | | | 0.1 | | | | |
| 1,1,3,3-tetramethylguanidine | | | | | | | | | | | | | | 1.0 |
| Xylene | | | | | | | | | | | | | | 1.0 |
| 1-Methoxy-2-propanol | | | | | | | | | | | 3.8 | | | |
| Total part (B) | 4.7 | 5.2 | 8.2 | 8.2 | 6.2 | 6.2 | 6.2 | 8.2 | 6.2 | 5.05 | 8.4 | 6.2 | 6.2 | 6.2 |
| | | | | | | | | | | | | | | |
| ***Properties*** | | | | | | | | | | | | | | |
| TFT at 5°C/85RH (h) | 0.5 | 0.5 | 1.5 | 1 | 3.5 | 3 | 3 | 1 | 3.5 | 4 | 2 | 15 | >24 | >24 |
| Drying state after 24h | Hard dry | Hard dry | Hard dry | Hard dry | Hard dry | Hard dry | Hard dry | Hard dry | Hard dry | Hard dry | Hard dry | Touch dry | Tacky | Tacky |

| | | | | | | | | | | | | | | |
|---|---|---|---|---|---|---|---|---|---|---|---|---|---|---|
| ¹Wacker^{®} TES 40 WN ²TIB KAT 233, ³K-KAT XK-651, ⁴Borchers Deca Lithium 2, ⁵K-KAT 670, ⁶Polycat^{®}DBU, ⁷Dynasylan AMEO, ⁸ TIB KAT 811 | | | | | | | | | | | | | | |

**Table 5 Components in bold are part of the binder system**

| **Example** | **11** | **12** | **13** | **14** | **15** | **16** | **17** |
|---|---|---|---|---|---|---|---|
| *Part (A)* | | | | | | | |
| **B20: α,ω-Hydroxypolydimethylsiloxane** | 26.3 | 26.3 | 26.3 | 26.3 | 26.3 | 26.3 | 26.3 |
| **B0.5: α,ω-Hydroxypolydimethylsiloxane** | 26.3 | 26.3 | 26.3 | 26.3 | 26.3 | 26.3 | 26.3 |
| Hydrophobic silica | 0.5 | 0.5 | 0.5 | 0.5 | 0.5 | 0.5 | 0.5 |
| Copper pyrithione | 8.0 | 8.0 | 8.0 | 8.0 | 8.0 | 8.0 | 8.0 |
| Iron oxide red | 3.5 | 3.5 | 3.5 | 3.5 | 3.5 | 3.5 | 3.5 |
| Methyl phenyl polysiloxane oil (additive oil) | 5.0 | 5.0 | 5.0 | 5.0 | 5.0 | 5.0 | 5.0 |
| Polyether modified silicone oil (hydrophilic modified, Mw 7460, HLB 4.7) | 10.0 | 10.0 | 10.0 | 10.0 | 10.0 | 10.0 | 10.0 |
| Xylene | 20.4 | 20.4 | 20.4 | 20.4 | 20.4 | 20.4 | 20.4 |
| Total part (A) | 100 | 100 | 100 | 100 | 100 | 100 | 100 |
| | | | | | | | |
| *Part (B)* | | | | | | | |
| Ethyl silicate' | 4.2 | 4.2 | 4.2 | 4.2 | 4.2 | 4.2 | 4.2 |
| Bismuth carboxylate² | 2.0 | | 1.25 | | | | |
| Lithium carboxylate³ | | 2.0 | | 1.25 | | | |
| Zinc-amine complex⁶ | | | | | | | 2.0 |
| 1,8-diazabicyclo-5.4.0-7-undecene | 2.0 | 2.0 | | | 0.5 | | |
| 3-Aminopropyltriethoxysilane⁵ | | | 0.75 | 0.75 | | 1.0 | 1.0 |
| Total part (C) | 8.2 | 8.2 | 6.2 | 6.2 | 4.7 | 5.2 | 7.2 |
| | | | | | | | |
| ***Properties*** | | | | | | | |
| TFT at 5°C/85%RH (h) | 0.5 | 1 | 2 | 1 | 0.5 | 1 | 3.0 |
| Drying state after 24h | Hard dry | Hard dry | Hard dry | Hard dry | Hard dry | Hard dry | Hard dry |
| | | | | | | | |

| | | | | | | | |
|---|---|---|---|---|---|---|---|
| ¹Wacker^{®} TES 40 WN ²K-KAT XK-651, ³Borchers Deca Lithium 2, ⁴Polycat^{®}DBU, ⁵Dynasylan AMEO, ⁶K-KAT XK-661 | | | | | | | |

**Table 6 Components in bold are part of the binder system**

| **Example** | **18** | **19** | **20** | **C-4** | **C-5** | **C-6** | **C-7** | **C-8** | **C-9** | **C-10** |
|---|---|---|---|---|---|---|---|---|---|---|
| *Part (A)* | | | | | | | | | | |
| **B0.1: α,ω-Hydroxypolydimethylsiloxane** | | | | | | | | | | |
| **B0.5: α,ω-Hydroxypolydimethylsiloxane** | 15.3 | | | | | | | | | |
| **B1: α,ω-Hydroxypolydimethylsiloxane** | | 29.8 | 59.5 | | | | | | | |
| **B3.5: α,ω-Hydroxypolydimethylsiloxane** | | | | 59.5 | 59.5 | 59.5 | | | | 16.5 |
| **B5: α,ω-Hydroxypolydimethylsiloxane** | | | | | | | 59.5 | | 29.8 | |
| **B20: α,ω-Hydroxypolydimethylsiloxane** | 40.3 | 29.8 | | | | | | 59.5 | 29.8 | 43.0 |
| Hydrophobic silica | 0.5 | 0.5 | 0.5 | 0.5 | 0.5 | 0.5 | 0.5 | 0.5 | 0.5 | 0.5 |
| Iron oxide black | 0.5 | 0.5 | 0.5 | 0.5 | 0.5 | 0.5 | 0.5 | 0.5 | 0.5 | 0.5 |
| Titanium dioxide | 2.4 | 2.4 | 2.4 | 2.4 | 2.4 | 2.4 | 2.4 | 2.4 | 2.4 | 2.4 |
| Methyl phenyl polysiloxane oil (additive oil) | 10.3 | 10.2 | 10.2 | 10.2 | 10.2 | 10.2 | 10.2 | 10.2 | 10.2 | 10.2 |
| Polyether modified silicone oil (hydrophilic modified, Mw 7460 g/mol, HLB 4.7) | 5.1 | 5.0 | 5.0 | 5.0 | 5.0 | 5.0 | 5.0 | 5.0 | 5.0 | 5.0 |
| Xylene | 8.4 | 8.4 | 8.4 | 8.4 | 8.4 | 8.4 | 8.4 | 8.4 | 8.4 | 8.4 |
| 1-Methoxy-2-propanol | 13.4 | 13.4 | 13.4 | 13.4 | 13.4 | 13.4 | 13.4 | 13.4 | 13.4 | 13.4 |
| Total part (A) | 100 | 100 | 100 | 100 | 100 | 100 | 100 | 100 | 100 | 100 |
| | | | | | | | | | | |
| *Part (B)* | | | | | | | | | | |
| Ethyl silicate¹ | 4.2 | 4.2 | 4.2 | 4.2 | 4.2 | 4.2 | 4.2 | 4.2 | 4.2 | 4.2 |
| Dibutyltin diacetate² | | | | 0.4 | | | | | | |
| Bismuth carboxylate³ | 1.25 | 1.25 | 1.25 | | | | 1.25 | 1.25 | 1.25 | 1.25 |
| 1,8-diazabicyclo-5.4.0-7-undecene⁴ | | | | | 0.5 | | | | | |
| 3-Aminopropyltriethoxysilane⁵ | 0.75 | 0.75 | 0.75 | | | 1.0 | 0.75 | 0.75 | 0.75 | 0.75 |
| 1-Methoxy-2-propanol | | | | 3.8 | | | | | | |
| Total part (B) | 6.2 | 6.2 | 2.0 | 8.4 | 4.7 | 5.2 | 2.0 | 2.0 | 2.0 | 2.0 |
| | | | | | | | | | | |
| ***Properties*** | | | | | | | | | | |
| **TFT at 5°C/85%RH (h)** | 4 | 3 | 3 | 3.5 | >24 | 5 | 3.5 | 3 | 3 | 4 |
| **Drying state after 24h** | Hard dry | Hard dry | Hard dry | Hard dry | Tacky | Touch dry | Touch dry | Touch dry | Touch dry | Touch dry |

| | | | | | | | | | | |
|---|---|---|---|---|---|---|---|---|---|---|
| ¹Wacker^{®} TES 40 WN ²TIB KAT 233, ³K-KAT XK-651, ⁴Polycat^{®}DBU, ⁵Dynasylan AMEO | | | | | | | | | | |

The following observations can be made with regards to the above examples.
- The comparative examples C1-C3, C11 and the examples 1-17 show the effect of using different catalysts in a composition based on a mix of binders with Mw 24238 and 98279 (viscosity 440 and 22 050 mPas, respectively).
- In example 1 and 2 it is shown that a combination of B0.5 (440 mPas) and B20 (22 050 mPas) in a 50:50 mixing ratio cures at 5 °C if either DBU or aminosilane is used. It can be desirable to add a metal catalyst to improve the robustness of the system and ensure sufficient pot-life.
- Examples 3-10 show examples of curing with DBU or aminosilane in combination with bismuth, lithium, cerium and zinc catalysts.
- In comparative example C1 it is shown that the TFT and hardness with a conventional tin-catalyst is comparable with the TFT and hardness obtained with the catalyst system of the present invention.
- If the tin catalyst shown in comparative example C1 is replaced by bismuth or lithium catalysts alone (comparative example C2 and C3) the TFT is increased significantly and the required hardness is not obtained.
- Comparative example C11 shows that using a Guanidine-based catalyst does not give the required TFT or hardness.
- Inventive examples 11 to 17 contain copper pyrithione in the formulation and curing is obtained at 5 °C using DBU or AMEO alone or in combination with bismuth, zinc and lithium catalysts.
- The comparative examples C4 to C10 and the inventive examples 18, 19, and 20 illustrate the effect of low and high molecular weight binder combinations.
- In examples 1-17 a binder mixture of B20 (22 050 mPas) and B0.5 (440 mPas) is used in a 50:50 mixing ratio. In example 18 the mixing ratio is B20:B0.5 (73:28). It is observed that the TFT is significantly increased by decreasing the amount of the lower molecular weight binder.
- In example 19 it is shown that with a binder mixture of B20 (22 050 mPas) and B1 (1000 mPas) in a 50:50 mixing ratio the required TFT and hardness after 24 hours is also achieved..
- Comparative example C10 on the other hand show that using a binder mixture of B20 (22 050mPas) and B3.5 (3800 mPas) in a 73:28 mixing ratio does not work. This is due to the molecular weight if the B3.5 binder being too high to achieve the desired effect of the invention. Comparative example C9 show that a combination of B20 and B5 does not work either.
- In example 20 it is shown that one binder B1 with a viscosity of 1000 mPas(Mw 35,629 g/mol) cured within the required TFT with proper hardness.
- Comparative examples C5 to C8 show that if only one binder is used which does not meet the requirements of the invention sufficient curing does not occur at 5 °C using the catalyst system of the invention.
- Comparative example C1 and C4 illustrate that by using the tin-based catalyst the TFT and hardness after 24 hours is comparable for the combination of binders and single binders.
- Comparative examples from C5 to C11 did not form a tack-free film during 24 h of testing.

## Claims

1. A fouling release coating composition free of tin compounds comprising:
(a) a polysiloxane-based binder system comprising at least one curable polysiloxane-based binder A having a weight average Mw of 50,000 g/mol or less, such as 8,000 to 50,000 g/mol, or a viscosity of 2,800 mPas or less, such as 300 to 2,800 mPas, as determined in accordance with the respective methods described under the heading "Determination Methods" in the description;
and wherein binder A constitutes at least 27 wt.% of the total polysiloxane-based binder system;
(b) at least one amidine or amine compound having a molecular weight of 1000 g/mol or less;
wherein the at least one amidine compound is an amidine of formula: 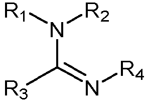
wherein R₁, R₂, R₃, R₄ are each independently selected from hydrogen, monovalent organic groups, monovalent heteroorganic groups, and combinations thereof,
wherein any two or more of R₁, R₂, R₃, R₄ optionally can be bonded together to form a ring structure; and
wherein the at least one amine compound is an aminosilane.

2. A fouling release coating composition as claimed in claim 1, wherein the polysiloxane-based binder system further comprises a curable polysiloxane-based binder B which is different from binder A and wherein the weight average Mw of binder B is 55,000 g/mol or more as determined in accordance with the method described under the heading "Determination Methods" in the description.

3. A fouling release coating composition as claimed in claim 1, wherein the polysiloxane-based binder system further comprises a curable polysiloxane-based binder B which is different from binder A and wherein the viscosity of binder B is 3500 mPas or more as determined in accordance with the method described under the heading "Determination Methods" in the description.

4. A fouling release coating composition as claimed in claim 2 or 3 wherein the mixture of the at least two polysiloxane binders has a PDI of more than 2.5.

5. A fouling release coating composition as claimed in any one of claims 1 to 4 wherein the polysiloxane-based binder A or B is of formula (D1): 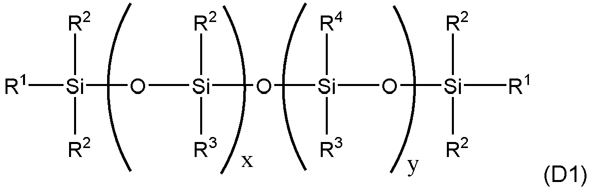 wherein
each R¹ is independently selected from a hydroxyl group, C₁₋₆-alkoxy group, or O-Si(R⁵)₃-_{z}(R⁶)_{z};
each R² is independently selected from C₁₋₁₀ alkyl, C₆₋₁₀ aryl, C₇₋₁₀ alkylaryl or C₁₋₆ alkyl substituted by poly(alkylene oxide) and/or a group as described for R¹;
each R³ and R⁴ is independently selected from C₁₋₁₀ alkyl, C₆₋₁₀ aryl, C₇₋₁₀ alkylaryl or C₁₋₆ alkyl substituted by poly(alkylene oxide);
each R⁵ is independently a hydrolysable group such as C₁₋₆ alkoxy group, an acetoxy group, an enoxy group or ketoxy group;
each R⁶ is independently selected from a C₁₋₆ alkyl group;
z is 0 or an integer from 1-2;
x is an integer of at least 2;
y is an integer of at least 2.

6. A fouling release coating composition as claimed in any preceding claim
wherein component (b) is an aminosilane.

7. A fouling release coating composition as claimed in any preceding claim
wherein component (b) is an aminoalkyltrialkoxysilane or,
bis(alkyltrialkoxysilyl)amine such as bis(3-propyltriethoxysilyl)amine or 3-aminopropyltriethoxy silane.

8. A fouling release coating composition as claimed in any preceding claim wherein component (b) is an amidine of formula: 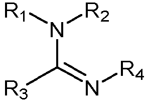
wherein R₁, R₂, R₃, R₄ are each independently selected from hydrogen, monovalent organic groups, monovalent heteroorganic groups, and combinations thereof.
and wherein any two or more of R₁, R₂, R₃, R₄ optionally can be bonded together to form a ring structure.

9. A fouling release coating composition as claimed in any preceding claim
wherein component (b) is 1,8-diazabicyclo 5.4.0-7-undecene (DBU).

10. A fouling release coating composition as claimed in any preceding claim further comprising at least one metal catalyst being a salt or organometallic compound of Zn, Li, K, Fe, Bi, Ce or Zr.

11. A fouling release coating composition as claimed in claim 1, free of tin compounds, comprising (dry weight):
(a) at least 40 wt% of a polysiloxane-based binder system comprising at least two different curable polysiloxane-based binders A and B wherein the weight average Mw of binder A is 50,000 g/mol or less and the weight average Mw of binder B is 55,000 g/mol or more as determined in accordance with the method described under the heading "Determination Methods" in the description, and wherein binder A constitutes at least 27 wt.% of the total polysiloxane-based binder system; or
at least 40 wt% of a polysiloxane-based binder system comprising at least two different curable polysiloxane-based binders A and B wherein the viscosity of binder A is 2,800 mPas or less and the viscosity of binder B is 3500 mPas or more as determined in accordance with the method described under the heading "Determination Methods" in the description, and wherein binder A constitutes at least 27 wt.% of the total polysiloxane-based binder system; or
at least 40 wt% of a polysiloxane-based binder system comprising at least one curable polysiloxane-based binder having a Mw of 50000 g/mol or less as determined in accordance with the method described under the heading "Determination Methods" in the description, wherein the binder constitutes at least 60 wt.% of the total polysiloxane-based binder system; or
at least 40 wt% of a polysiloxane-based binder system comprising at least one curable polysiloxane-based binder having a viscosity of 2,800 mPas or less as determined in accordance with the method described under the heading "Determination Methods" in the description, wherein the binder constitutes at least 60 wt.% of the total polysiloxane-based binder system;
(b) 0.1 to 5.0 wt% of the at least one amidine or amine compound;
(c) 0.0 to 5.0 wt%, preferably 0.1 to 5.0 wt% of at least one metal catalyst being a salt or organometallic compound of Zn, Li, K, Fe, Bi or Zr;
(d) 0 to 30 wt%, preferably 1.0 to 30 wt% of a hydrophilic modified polysiloxane; and
(e) 0 to 8.0 wt%, preferably 2.0 to 8.0 wt% crosslinker.

12. A process for applying and curing a fouling release coating composition to a substrate, such as a marine substrate, comprising applying the fouling release coating composition as claimed in claim 1 to a substrate and curing the fouling release coating composition at a temperature of 10°C or less.

13. A process as claimed in claim 12 wherein curing is effected at a temperature of 0 to 10 °C.

14. A substrate comprising a cured fouling release coating composition as claimed in claim 1 to 11.

## Patentansprüche

1. Foul-Release-Beschichtungszusammensetzung, frei von Zinnverbindungen, umfassend:
(a) ein Bindemittelsystem auf Polysiloxanbasis, umfassend mindestens ein härtbares Bindemittel A auf Polysiloxanbasis, das ein Gewichtsmittel Mw von 50.000 g/mol oder weniger aufweist, wie zum Beispiel 8.000 bis 50.000 g/mol, oder eine Viskosität von 2.800 mPas oder weniger, wie zum Beispiel 300 bis 2.800 mPas, wie gemäß den jeweiligen Verfahren bestimmt, die in der Beschreibung unter der Überschrift "Bestimmungsverfahren" beschrieben sind;
und wobei das Bindemittel A mindestens 27 Gew.-% des gesamten Bindemittelsystems auf Polysiloxanbasis ausmacht;
(b) mindestens eine Amidin- oder Aminverbindung, die ein Molekulargewicht von 1000 g/mol oder weniger aufweist;
wobei die mindestens eine Amidinverbindung ein Amidin der folgenden Formel ist: 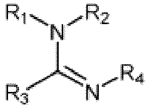
wobei R₁, R₂, R₃, R₄ jeweils unabhängig voneinander ausgewählt sind aus Wasserstoff, einwertigen organischen Gruppen, einwertigen heteroorganischen Gruppen und Kombinationen davon,
wobei zwei oder mehr beliebige von R₁, R₂, R₃, R₄ gegebenenfalls miteinander verbunden sein können, um eine Ringstruktur zu bilden; und
wobei die mindestens eine Aminverbindung ein Aminosilan ist.

2. Foul-Release-Beschichtungzusammensetzung nach Anspruch 1, wobei das Bindemittelsystem auf Polysiloxanbasis weiter ein härtbares Bindemittel B auf Polysiloxanbasis umfasst, das sich von Bindemittel A unterscheidet, und wobei das gewichtsdurchschnittliche Mw von Bindemittel B 55.000 g/mol oder mehr beträgt, wie gemäß dem Verfahren bestimmt, das in der Beschreibung unter der Überschrift "Bestimmungsverfahren" beschrieben ist;

3. Foul-Release-Beschichtungzusammensetzung nach Anspruch 1, wobei das Bindemittelsystem auf Polysiloxanbasis weiter ein härtbares Bindemittel B auf Polysiloxanbasis umfasst, das sich von Bindemittel A unterscheidet, und wobei die Viskosität von Bindemittel B 3500 mPas oder mehr beträgt, wie gemäß dem Verfahren bestimmt, das in der Beschreibung unter der Überschrift "Bestimmungsverfahren" beschrieben ist;

4. Foul-Release-Beschichtungszusammensetzung nach Anspruch 2 oder 3, wobei die Mischung der mindestens zwei Polysiloxanbindemittel einen PDI von mehr als 2,5 aufweist.

5. Foul-Release-Beschichtungszusammensetzung nach einem der Ansprüche 1 bis 4, wobei das Bindemittel A oder B auf Polysiloxanbasis die Formel (D1) aufweist: 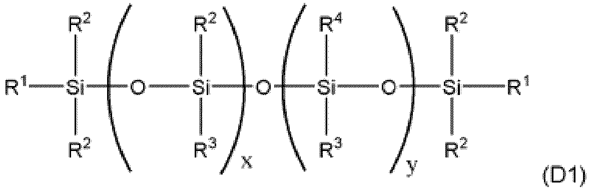 wobei
jedes R¹ unabhängig ausgewählt ist aus einer Hydroxylgruppe, C₁₋₆-Alkoxygruppe oder O-Si(R⁵)_{3-z}(R⁶)_{z};
jedes R² unabhängig ausgewählt ist aus C₁₋₁₀-Alkyl, C₆₋₁₀-Aryl, C₇₋₁₀Alkylaryl oder C₁₋₆-Alkyl, substituiert durch Poly(alkylenoxid) und/oder einer Gruppe wie für R¹ beschrieben;
jedes R³ und R⁴ unabhängig ausgewählt ist aus C₁₋₁₀-Alkyl, C₆₋₁₀-Aryl, C₇₋₁₀-Alkylaryl oder C₁₋₆-Alkyl, substituiert durch Poly(alkylenoxid);
jedes R⁵ unabhängig eine hydrolysierbare Gruppe wie eine C₁₋₆-Alkoxygruppe, eine Acetoxygruppe, eine Enoxygruppe oder eine Ketoxygruppe ist;
jedes R⁶ unabhängig ausgewählt ist aus einer C₁₋₆-Alkylgruppe;
z gleich 0 oder eine ganze Zahl von 1-2 ist;
x eine ganze Zahl von mindestens 2 ist;
y eine ganze Zahl von mindestens 2 ist.

6. Foul-Release-Beschichtungszusammensetzung nach einem vorstehenden Anspruch, wobei die Komponente (b) ein Aminosilan ist.

7. Foul-Release-Beschichtungzusammensetzung nach einem vorstehenden Anspruch, wobei die Komponente (b) ein Aminoalkyltrialkoxysilan oder
Bis(alkyltrialkoxysilyl)amin wie Bis(3-propyltriethoxysilyl)amin oder 3-Aminopropyltriethoxysilan ist.

8. Foul-Release-Beschichtungszusammensetzung nach einem vorstehenden Anspruch, wobei die Komponente (b) ein Amidin der folgenden Formel ist: 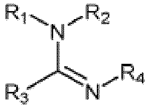
wobei R₁, R₂, R₃, R₄ jeweils unabhängig aus Wasserstoff, einwertigen organischen Gruppen, einwertigen heteroorganischen Gruppen und Kombinationen davon ausgewählt sind.
und wobei zwei oder mehr beliebige von R₁, R₂, R₃, R₄ gegebenenfalls miteinander verbunden sein können, um eine Ringstruktur zu bilden.

9. Foul-Release-Beschichtungszusammensetzung nach einem vorstehenden Anspruch, wobei Komponente (b) 1,8-Diazabicyclo-5.4.0-7-undecen (DBU) ist.

10. Foul-Release-Beschichtungszusammensetzung nach einem vorstehenden Anspruch, die weiter mindestens einen Metallkatalysator umfasst, der ein Salz oder eine organometallische Verbindung von Zn, Li, K, Fe, Bi, Ce oder Zr ist.

11. Foul-Release-Beschichtungszusammensetzung nach Anspruch 1, frei von Zinnverbindungen, umfassend (Trockengewicht):
(a) mindestens 40 Gew.-% eines Bindemittelsystems auf Polysiloxanbasis, das mindestens zwei verschiedene härtbare Bindemittel A und B auf Polysiloxanbasis umfasst, wobei das Gewichtsmittel Mw des Bindemittels A 50.000 g/mol oder weniger beträgt und das Gewichtsmittel Mw des Bindemittels B 55.000 g/mol oder mehr beträgt, wie gemäß dem Verfahren bestimmt, das in der Beschreibung unter der Überschrift "Bestimmungsverfahren" beschrieben ist, und wobei das Bindemittel A mindestens 27 Gew.-% des gesamten Bindemittelsystems auf Polysiloxanbasis ausmacht; oder
mindestens 40 Gew.-% eines Bindemittelsystems auf Polysiloxanbasis, das mindestens zwei verschiedene härtbare Bindemittel A und B auf Polysiloxanbasis umfasst, wobei die Viskosität des Bindemittels A 2.800 mPas oder weniger und die Viskosität des Bindemittels B 3.500 mPas oder mehr beträgt, wie gemäß dem Verfahren bestimmt, das in der Beschreibung unter der Überschrift "Bestimmungsverfahren" beschrieben ist, und wobei das Bindemittel A mindestens 27 Gew.-% des gesamten Bindemittelsystems auf Polysiloxanbasis ausmacht; oder
mindestens 40 Gew.-% eines Bindemittelsystems auf Polysiloxanbasis, das mindestens ein härtbares Bindemittel auf Polysiloxanbasis umfasst, das ein Mw von 50.000 g/mol oder weniger aufweist, wie gemäß dem Verfahren bestimmt, das in der Beschreibung unter der Überschrift "Bestimmungsverfahren" beschrieben ist, wobei das Bindemittel mindestens 60 Gew.-% des gesamten Bindemittelsystems auf Polysiloxanbasis ausmacht; oder
mindestens 40 Gew.-% eines Bindemittelsystems auf Polysiloxanbasis, das mindestens ein härtbares Bindemittel auf Polysiloxanbasis umfasst, das eine Viskosität von 2.800 mPas oder weniger aufweist, wie gemäß dem Verfahren bestimmt, das in der Beschreibung unter der Überschrift "Bestimmungsverfahren" beschrieben ist, wobei das Bindemittel mindestens 60 Gew.-% des gesamten Bindemittelsystems auf Polysiloxanbasis ausmacht;
(b) 0,1 bis 5,0 Gew.-% der mindestens einen Amidin- oder Aminverbindung;
(c) 0,0 bis 5,0 Gew.-%, bevorzugt 0,1 bis 5,0 Gew.-% mindestens eines Metallkatalysators, der ein Salz oder eine organometallische Verbindung von Zn, Li, K, Fe, Bi oder Zr ist;
(d) 0 bis 30 Gew.-%, bevorzugt 1,0 bis 30 Gew.-% eines hydrophil modifizierten Polysiloxans; und
(e) 0 bis 8,0 Gew.-%, bevorzugt 2,0 bis 8,0 Gew.-% Vernetzer.

12. Prozess zum Auftragen und Aushärten einer Foul-Release-Beschichtungszusammensetzung auf einem Substrat, wie zum Beispiel einem Meeressubstrat, umfassend das Auftragen der Foul-Release-Beschichtungszusammensetzung nach Anspruch 1 auf ein Substrat und das Aushärten der Foul-Release-Beschichtungszusammensetzung bei einer Temperatur von 10 °C oder weniger.

13. Prozess nach Anspruch 12, wobei das Aushärten bei einer Temperatur von 0 bis 10 °C erfolgt.

14. Substrat, das eine ausgehärtete Foul-Release-Beschichtungszusammensetzung nach den Ansprüchen 1 bis 11 umfasst.

## Revendications

1. Composition de revêtement anti-salissures exempte de composés d'étain, comprenant :
(a) un système de liant à base de polysiloxane comprenant au moins un liant à base de polysiloxane durcissable A présentant une moyenne en poids Mw inférieure ou égale à 50 000 g/mole, telle que 8 000 à 50 000 g/mole, ou une viscosité inférieure ou égale à 2 800 mPa, telle que de 300 à 2 800 mPa, telles que déterminées conformément aux procédés respectifs décrits sous la rubrique « Procédés de détermination » dans la description ;
et dans laquelle le liant A constitue au moins 27 % en poids du système de liant total à base de polysiloxane ;
(b) au moins un composé amidine ou amine présentant un poids moléculaire inférieur ou égal à 1000 g/mole ;
dans laquelle le au moins un composé amidine est une amidine de formule : 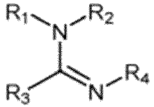
dans laquelle R₁, R₂, R₃, R₄ sont chacun indépendamment sélectionnés parmi hydrogène, des groupes organiques monovalents, des groupes hétéro-organiques monovalents et des combinaisons de ceux-ci,
dans laquelle deux quelconques ou plus parmi R₁, R₂, R₃, R₄ peuvent éventuellement être liés ensemble pour former une structure cyclique ; et
dans laquelle le au moins un composé amine est un aminosilane.

2. Composition de revêtement anti-salissures selon la revendication 1, dans laquelle le système de liant à base de polysiloxane comprend en outre un liant B à base de polysiloxane durcissable qui est différent du liant A et dans laquelle la moyenne en poids Mw du liant B est supérieure ou égale à 55 000 g/mole, telle que déterminée conformément au procédé décrit sous la rubrique « Procédés de détermination » dans la description.

3. Composition de revêtement anti-salissures selon la revendication 1, dans laquelle le système de liant à base de polysiloxane comprend en outre un liant B à base de polysiloxane durcissable qui est différent du liant A et dans laquelle la viscosité du liant B est supérieure ou égale à 3 500 mPa, telle que déterminée conformément au procédé décrit sous la rubrique « Procédés de détermination » dans la description.

4. Composition de revêtement anti-salissures selon la revendication 2 ou 3, dans laquelle le mélange des au moins deux liants polysiloxanes présente un PDI supérieur à 2,5.

5. Composition de revêtement anti-salissures selon l'une quelconque des revendications 1 à 4, dans laquelle le liant à base de polysiloxane A ou B répond à la formule (D1) : 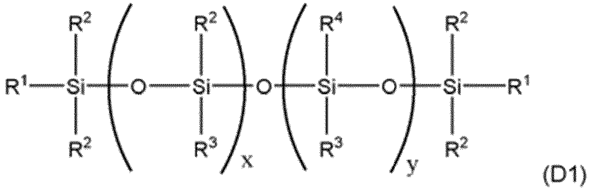 dans laquelle
chaque R¹ est indépendamment sélectionné parmi un groupe hydroxyle, un groupe alcoxy en C₁₋₆ ou O-Si(R⁵)_{3-z} (R⁶)_{z} ;
chaque R² est indépendamment sélectionné parmi alkyle en C₁₋₁₀, aryle en C₆₋₁₀, alkylaryle en C₇₋₁₀ ou alkyle en C₁₋₆ substitué par un poly(oxyde d'alkylène) et/ou un groupe tel que décrit pour R¹ ;
chaque R³ et R⁴ sont indépendamment sélectionnés parmi alkyle en C₁₋₁₀, aryle en C₆₋₁₀, alkylaryle en C₇₋₁₀ ou alkyle en C₁₋₆ substitué par poly(oxyde d'alkylène) ;
chaque R⁵ est indépendamment un groupe hydrolysable tel qu'un groupe alcoxy en C₁₋₆, un groupe acétoxy, un groupe énoxy ou un groupe cétoxy ;
chaque R⁶ est indépendamment sélectionné parmi un groupe alkyle en C₁₋₆ ;
z est 0 ou un nombre entier de 1-2 ;
x est un nombre entier d'au moins 2 ;
y est un nombre entier d'au moins 2.

6. Composition de revêtement anti-salissures selon une quelconque revendication précédente, dans laquelle le composant (b) est un aminosilane.

7. Composition de revêtement anti-salissures selon une quelconque revendication précédente, dans laquelle le composant (b) est un aminoalkyltrialcoxysilane ou,
une bis(alkyltrialcoxysilyl)amine telle que la bis(3-propyltriéthoxysilyl)amine ou le 3-aminopropyltriéthoxysilane.

8. Composition de revêtement anti-salissures selon une quelconque revendication précédente, dans laquelle le composant (b) est une amidine de formule : 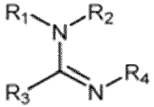
dans laquelle R₁, R₂, R₃, R₄ sont chacun indépendamment sélectionnés parmi hydrogène, des groupes organiques monovalents, des groupes hétéro-organiques monovalents et des combinaisons de ceux-ci.
et dans laquelle deux quelconque ou plus parmi R₁, R₂, R₃, R₄ peuvent éventuellement être liés ensemble pour former une structure cyclique.

9. Composition de revêtement anti-salissures selon une quelconque revendication précédente, dans laquelle le composant (b) est le 1,8-diazabicyclo 5.4.0-7-undécène (DBU).

10. Composition de revêtement anti-salissures selon une quelconque revendication précédente comprenant en outre au moins un catalyseur métallique qui est un sel ou un composé organométallique de Zn, Li, K, Fe, Bi, Ce ou Zr.

11. Composition de revêtement anti-salissures selon la revendication 1, exempte de composés d'étain, comprenant (poids sec) :
(a) au moins 40 % en poids d'un système de liant à base de polysiloxane comprenant au moins deux liants à base de polysiloxane durcissables différents A et B, dans laquelle la moyenne en poids Mw du liant A est inférieure ou égale à 50 000 g/mole et la moyenne en poids Mw du liant B est supérieure ou égale à 55 000 g/mole, telles que déterminées conformément au procédé décrit sous la rubrique « Procédés de détermination » dans la description, et dans laquelle le liant A constitue au moins 27 % en poids du système de liant total à base de polysiloxane ; ou
au moins 40 % en poids d'un système de liant à base de polysiloxane comprenant au moins deux liants durcissables différents A et B, dans laquelle la viscosité du liant A est inférieure ou égale à 2 800 mPa et la viscosité du liant B est supérieure ou égale à 3500 mPa, telles que déterminées conformément au procédé décrit sous la rubrique « Procédés de détermination » de la description, et dans laquelle le liant A constitue au moins 27 % en poids du système de liant total à base de polysiloxane ; ou
au moins 40 % en poids d'un système de liant à base de polysiloxane comprenant au moins un liant à base de polysiloxane durcissable présentant une Mw inférieure ou égale à 50 000 g/mole, telle que déterminée conformément au procédé décrit sous la rubrique « Procédés de détermination » dans la description, dans laquelle le liant constitue au moins 60 % en poids du système de liant total à base de polysiloxane ; ou
au moins 40 % en poids d'un système de liant à base de polysiloxane comprenant au moins un liant durcissable à base de polysiloxane présentant une viscosité inférieure ou égale à 2 800 mPa, telle que déterminée conformément au procédé décrit sous la rubrique « Procédés de détermination » dans la description, dans laquelle le liant constitue au moins 60 % en poids du système de liant total à base de polysiloxane ;
(b) 0,1 à 5,0 % en poids d'au moins un composé amidine ou amine ;
(c) 0,0 à 5,0 % en poids, de préférence 0,1 à 5,0 % en poids d'au moins un catalyseur métallique qui est un sel ou un composé organométallique de Zn, Li, K, Fe, Bi ou Zr ;
(d) 0 à 30 % en poids, de préférence 1,0 à 30 % en poids d'un polysiloxane modifié hydrophile ; et
(e) 0 à 8,0 % en poids, de préférence 2,0 à 8,0 % en poids d'agent de réticulation.

12. Processus d'application et de durcissement d'une composition de revêtement anti-salissures sur un substrat, tel qu'un substrat marin, comprenant l'application de la composition de revêtement anti-salissures selon la revendication 1 sur un substrat et le durcissement de la composition de revêtement anti-salissures à une température inférieure ou égale à 10 °C.

13. Processus selon la revendication 12, dans lequel le durcissement est effectué à une température de 0 à 10°C.

14. Substrat comprenant une composition de revêtement anti-salissures durcie selon les revendications 1 à 11.
